# EUROPÄISCHE PATENTSCHRIFT

(11) **EP 0 716 130 B1**
(45) Veröffentlichungstag und Bekanntmachung des Hinweises auf die Patenterteilung: **25.07.2001**
(21) Anmeldenummer: 95810626.2
(22) Anmeldetag: 04.10.1995
(51) Int. Cl.: C09B 62/513, C09B 62/09, C09B 62/01, C09B 67/00

(54) **Reaktivfarbstoffe, deren Herstellung und Verwendung**
Reactive dyestuffs, preparation and use thereof
Colorants réactifs, procédé pour leur préparation et leur utilisation

(30) Priorität: 13.10.1994 CH 308194
(43) Veröffentlichungstag der Anmeldung: 12.06.1996
(73) Patentinhaber: Ciba Specialty Chemicals Holding Inc., 4057 Basel (CH)
(72) Erfinder: Deitz, Rolf, D-79400 Kandern (DE); Müller, Bernhard, Dr., D-79588 Efringen-Kirchen (DE); Tzikas, Athanassios, Dr., CH-4133 Pratteln (CH)

(56) Entgegenhaltungen:
- EP-A- 0 617 089
- BE-A- 620 833
- DE-C- 965 902
- FR-A- 1 581 336
- NL-A- 276 578

## Beschreibung

Die vorliegende Erfindung betrifft neue Reaktivfarbstoffe, Verfahren zu ihrer Herstellung und ihre Verwendung.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der vorliegenden Erfindung sind Verbindungen der Formel 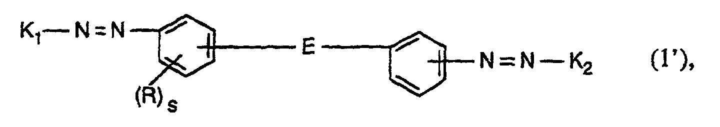 worin E für die Gruppe -NH-CO-, -NH-SO₂- oder -SO₂-NH-SO₂- steht,
(R)ₛ für s gleiche oder verschiedene Substituenten aus der Gruppe Sulfo, Hydroxy, C₁-C₄-Alkyl, C₁-C₄-Alkoxy, Halogen und Cyano steht,
s die Zahl 0, 1 oder 2 bedeutet,
K₁ und K₂ unabhängig voneinander je für einen Rest der Formel 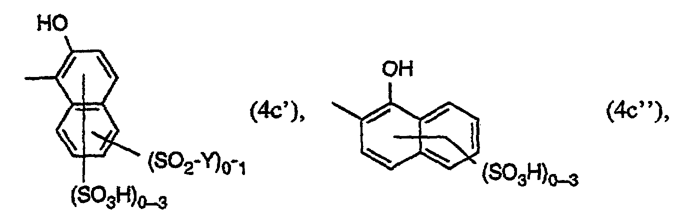 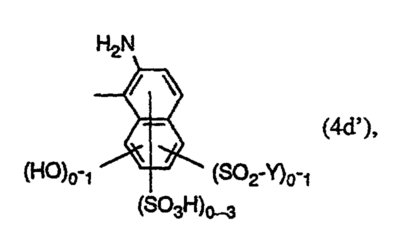 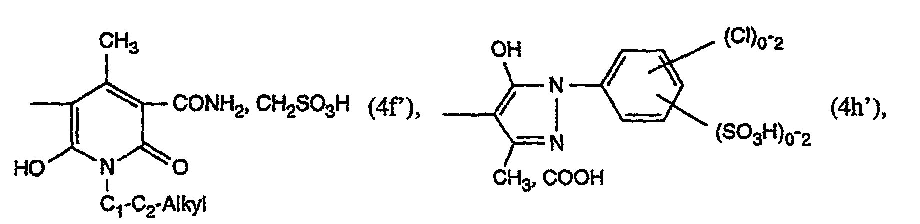 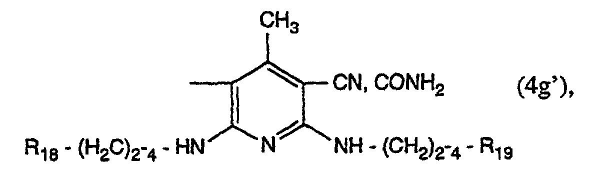 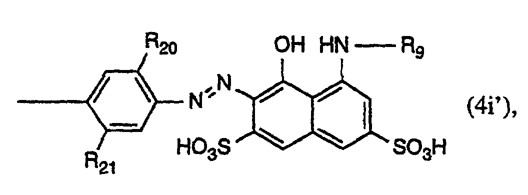 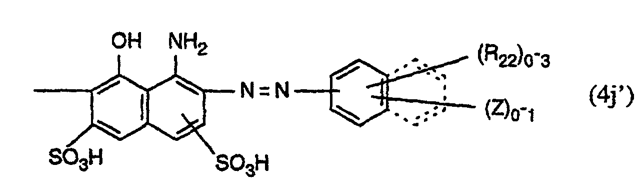 oder 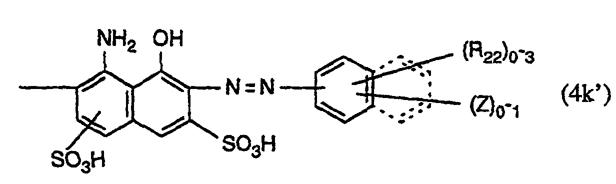 stehen, worin R₉ Acetyl, Benzoyl oder ein Rest der Formel 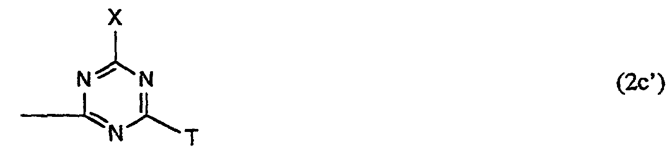 ist, worin X Halogen und T C₁-C₄-Alkoxy, C₁-C₄-Alkylthio, Hydroxy, Amino,
N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Alkyl gegebenenfalls durch Hydroxy, Sulfo oder Sulfato und das Phenyl jeweils unsubstituiert oder durch Sulfo, Carboxy, Acetylamino, Methyl oder Methoxy substituiert ist, oder einen faserreaktiven Rest der Formel 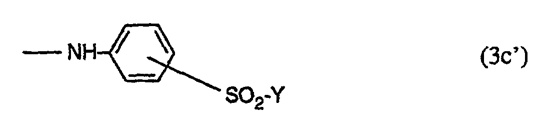 oder 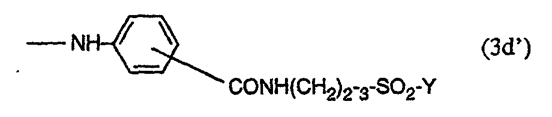 bedeuten, R₁₈ Wasserstoff, Hydroxy oder Sulfato ist, R₁₉ unabhängig die Bedeutung von R₁₈ hat oder für einen Rest der Formel 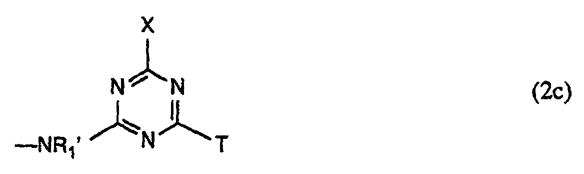 steht, worin R₁' Wasserstoff oder C₁-C₄-Alkyl ist, und X und T die oben angegebenen Bedeutungen haben, R₂₀ und R₂₁ unabhängig voneinander je für Wasserstoff, Methyl, Methoxy; 2-Hydroxyethoxy, 2-Sulfatoethoxy, Acetylamino, Propionylamino, Ureido oder Sulfo stehen, (R₂₂)₀₋₃ 0 bis 3 gleiche oder verschiedene Reste R₂₂ aus der Gruppe Sulfo, Chlor, C₁-C₄-Alkyl und C₁-C₄-Alkoxy bedeutet, Y Vinyl, β-Brom- oder β-Chlorethyl, β-Acetoxyethyl, β-Benzoyloxyethyl, β-Phosphatoethyl, β-Sulfatoethyl und β-Thiosulfatoethyl und insbesondere bevorzugt Vinyl oder β-Sulfatoethyl ist, und Z einen Rest der Formel

-SO₂-Y (2a)

oder

-CONR₂-(CH₂)ₙ-SO₂-Y (2b)

bedeutet, worin R₂ Wasserstoff oder C₁-C₄-Alkyl,
n eine ganze Zahl von 1 bis 6, und
Y die oben angegebene Bedeutung hat,
mit der Massgabe, dass mindestens einer der Reste K₁ und K₂ eine faserreaktive Gruppe trägt, und die Verbindungen der Formel (1') mindestens eine Sulfo- oder Sulfatogruppe aufweisen.

Die in der NL-A-276 578 und BE-A-620 833 offenbarten Farbstoffe unterscheiden sich von den erfindungsgemässen Verbindungen der Formel (1') gesamthaft durch mindestens eine der beiden Kupplungskomponenten.

Der Begriff Sulfo umfasst hierbei generell sowohl die freie Säure -SO₃H als auch eine beliebige Salzform, z.B. ein Alkali-, Erdalkali- oder Ammoniumsalz oder das Salz eines organischen Amins. Beispiele sind das Natrium-, Kalium-, Lithium- oder Ammoniumsalz oder das Salz des Triethanolamins.

C₁-C₄-Alkyl bedeutet generell Methyl, Ethyl, n- oder iso-Propyl oder n-, iso-, sec.- oder tert.-Butyl. C₁-C₄-Alkoxy bedeutet generell Methoxy, Ethoxy, n- oder iso-Propoxy oder n-, iso-, sec.- oder tert.-Butoxy und vorzugsweise Methoxy oder Ethoxy. Halogen steht generell z.B. für Brom oder Chlor.

Die erfindungsgemässen Reaktivfarbstoffe entsprechen bevorzugt der Formel 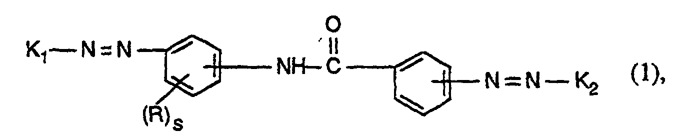 worin für K₁, K₂ und (R)ₛ jeweils die oben angegebene Bedeutung gilt.

R bedeutet vorzugsweise Sulfo, Hydroxy, Methyl oder Methoxy und besonders bevorzugt Sulfo.

s steht bevorzugt für die Zahl 1 oder 2.

Y steht bevorzugt für Vinyl oder β-Sulfatoethyl.

R₂ bedeutet Wasserstoff oder C₁-C₄-Alkyl, wie Methyl, Ethyl, Propyl, Isopropyl, Butyl, Isobutyl, sek.-Butyl oder tert.-Butyl und bevorzugt Wasserstoff, Methyl oder Ethyl. Insbesondere bevorzugt ist R₂ Wasserstoff.

n steht vorzugsweise für die Zahl 2, 3 oder 4 und besonders bevorzugt für die Zahl 2 oder 3.

Beispiele für geeignete nicht-reaktive Aminoreste T sind Amino, Methylamino, Ethylamino, β-Hydroxyethylamino, N,N-Di-β-Hydroxyethylamino, β-Sulfoethylamino, Morpholino, o-, m- oder p-Methylphenylamino, o-, m- oder p-Methoxyphenylamino, o-, m- oder p-Sulfophenylamino, Disulfophenylamino, o-Carboxyphenylamino, N-Ethyl-N-phenylamino, N-Methyl-N-phenylamino, Methoxy, Ethoxy, n- oder iso-Propoxy sowie Hydroxy.

Als nicht-reaktiver Rest hat T vorzugsweise die Bedeutung C₁-C₄-Alkoxy, C₁-C₄-Alkylthio, Hydroxy, Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Acetylamino, Methyl oder Methoxy substituiert ist.

Besonders bevorzugte nicht-reaktive Reste T sind Amino, N-Methylamino, N-Ethylamino, Morpholino, Phenylamino, 2-, 3- oder 4-Sulfophenylarnino oder N-C₁-C₄-Alkyl-N-phenylamino.

X bedeutet Halogen, z.B. Fluor, Chlor oder Brom und bevorzugt Chlor oder Fluor.

R₁' steht bevorzugt für Wasserstoff, Methyl oder Ethyl und besonders bevorzugt für Wasserstoff.

Die Reste K₁ und K₂ stehen unabhängig voneinander je besonders bevorzugt für einen Rest der oben angegebenen Formel (4j') oder (4k').

Die Reste K₁ und K₂ können verschieden oder, vorzugsweise, gleich sein.

Eine bevorzugte Ausführungsform der vorliegenden Erfindung betrifft Verbindungen der Formel 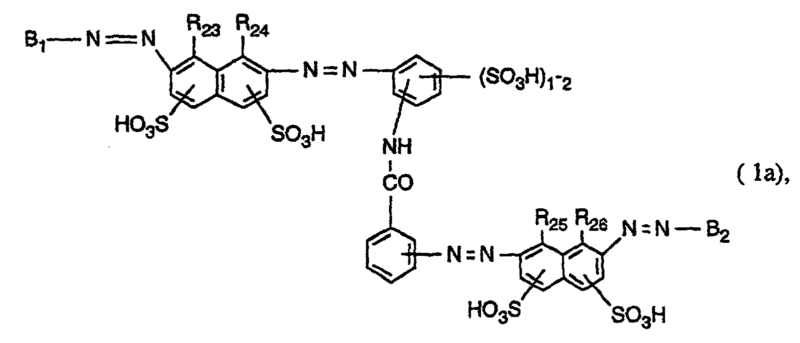 worin B₁ ein Rest der Formel 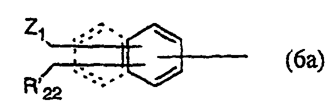 und B₂ ein Rest der Formel 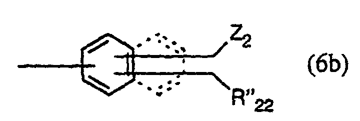 ist, R'₂₂ und R"₂₂ unabhängig voneinander je Wasserstoff, Sulfo, Chlor, C₁-C₄-Alkyl oder C₁-C₄-Alkoxy bedeutet, von den Resten R₂₃ und R₂₄ einer Hydroxy und der andere Amino bedeutet, von den Resten R₂₅ und R₂₆ einer Hydroxy und der andere Amino bedeutet und Z₁ und Z₂ unabhängig voneinander je für einen Rest der zuvor angegebenen Formel (2a) oder (2b) stehen.

Eine besonders bevorzugte Ausführungsform der vorliegenden Erfindung betrifft Verbindungen der Formel 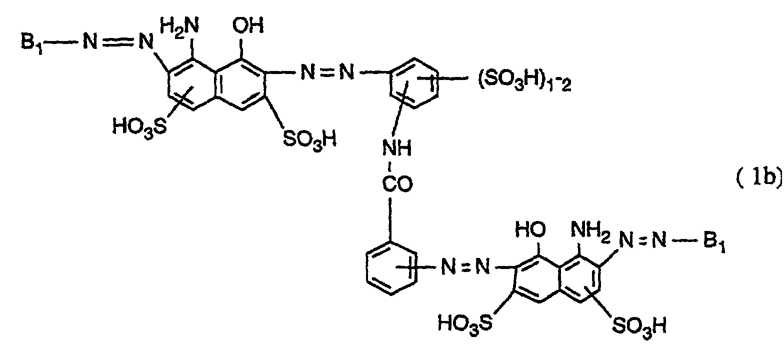 )oder 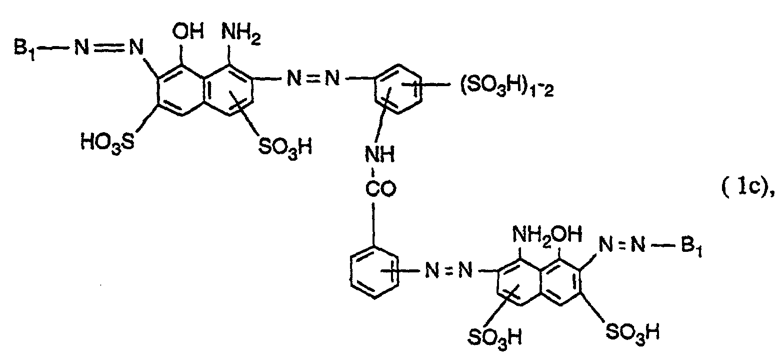 worin B₁ ein Rest der Formel 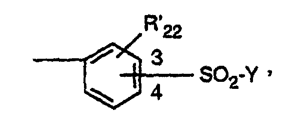 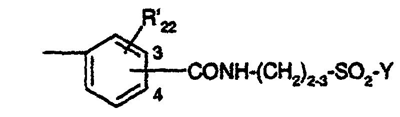 oder 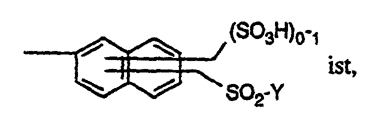 R'₂₂ Wasserstoff, Sulfo, Methyl oder Methoxy bedeutet und für Y die zuvor angegebenen Bedeutungen und Bevorzugungen gelten.

Die Verbindungen der Formel (1') können erhalten werden, z.B. indem man in etwa 1 Moläquivalent der Verbindung der Formel 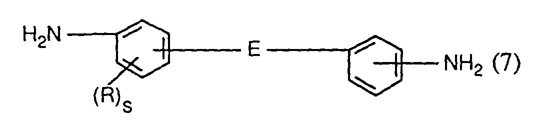 in üblicher Weise, z.B. mit Nitriten wie Natriumnitrit im sauren, z.B. salzsauren, Medium, tetrazotiert und die tetrazotierte Verbindung mit in etwa 1 Moläquivalent einer Kupplungskomponente der Formel

K₁ - H (8)

und in etwa 1 Moläquivalent einer Kupplungskomponente der Formel

K₂ - H (9)

in einem sauren, neutralen oder alkalischen Medium kuppelt, worin für E, R, K₁, K₂ und s jeweils die zuvor genannten Bedeutungen und Bevorzugungen gelten.

Handelt es sich bei K₁-H und K₂-H um identische Kupplungskomponenten, setzt man vorteilhaft in etwa 1-Moläquivalent der tetrazotierten Verbindung der Formel (7) mit in etwa 2 Moläquivalenten einer Verbindung der Formel (8) um.

Die Synthese der Verbindungen der Formel (1') kann auch so erfolgen, dass man die tetrazotierte Verbindung der Formel (7) zunächst mit einem Vorprodukt von K₁-H bzw. K₂-H kuppelt und die resultierende Disazoverbindung anschliessend, z.B. durch Kupplung mit einer weiteren diazotierten Diazokomponente, in die Endverbindung verwandelt.

Die bevorzugten Verbindungen der Formel (1b) und (1c) werden vorteilhaft hergestellt, indem man in etwa 1 Moläquivalent einer diazotierten Verbindung der Formel

B₁-NH₂ (10),

worin B₁ die zuvor angegebene Bedeutung hat, mit in etwa einem Moläquivalent einer Kupplungskomponente der Formel 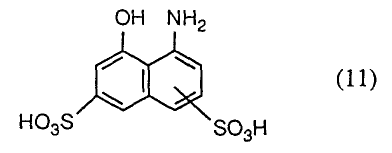 kuppelt, und die erhaltene Monoazoverbindung mit in etwa 0,5 Moläquivalenten einer tetrazotierten Verbindung der Formel 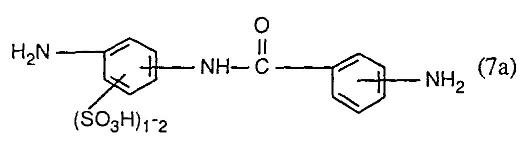 kuppelt. Dabei findet die erste Kupplung im Fall der Verbindungen der Formel (1b) in einem sauren Medium und im Fall der Verbindungen der Formel (1c) in einem alkalischen Medium statt. Dieses Verfahren ist insbesondere für die Herstellung der Verbindungen der Formel (1b) bevorzugt, wobei ein saurer pH-Wert bei der ersten Kupplung Verwendung findet.

Die Verbindungen der Formel (1b) und (1c) können auch hergestellt werden, indem man in etwa 0,5 Moläquivalente einer zuvor tetrazotierten Verbindung der Formel (7a) mit in etwa 1 Moläquivalent einer Verbindung der zuvor genannten Formel (11) kuppelt und die erhaltene Disazoverbindung anschliessend mit einer diazotierten Verbindung der zuvor angegebenen Formel (10) kuppelt. Dieses Verfahren ist insbesondere für die Herstellung der Verbindungen der Formel (1c) bevorzugt, wobei ein saurer pH-Wert bei der ersten Kupplung Verwendung findet.

Setzt man in die obigen Verfahren zur Herstellung der Verbindungen der Formel (1b) und (1c) anstelle eines Moläquivalents einer Verbindung der Formel (11) je ca. 0,5 Moläquivalente zweier verschiedener Verbindungen der Formel (11), z.B. je ca. 0,5 Moläquivalente einer Aminonaphtholdisulfosäure KK1 und ca. 0,5 Moläquivalente einer Aminionaphtholdisulfosäure KK2 ein, werden Mischungen von zwei symmetrischen und zwei asymmetrischen Verbindungen z.B. der Formel 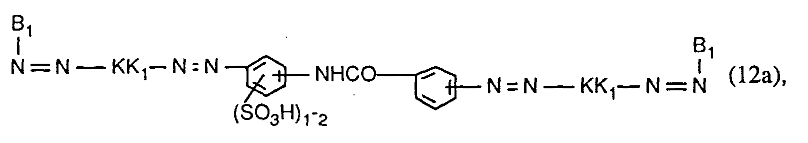 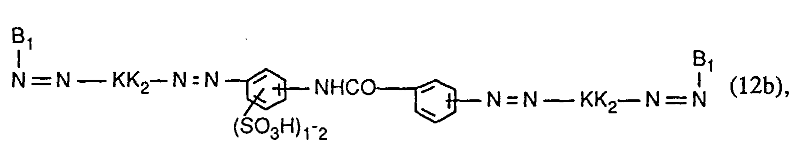 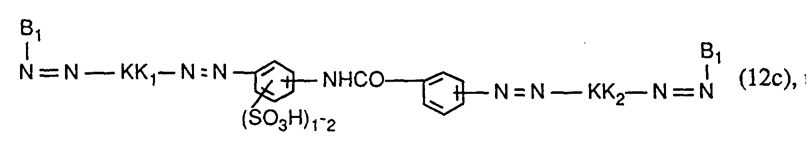 und 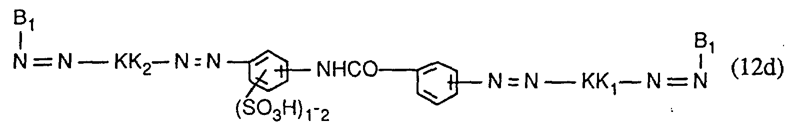 erhalten, die einen weiteren Gegenstand der vorliegenden Erfindung darstellen. In den Formeln (12a) bis (12d) gelten für die Variable B₁ die zuvor angegebenen Bedeutungen und Bevorzugungen, und KK1 steht bevorzugt für den Rest von 1-Amino-8-hydroxynaphthalin-3,6-disulfonsäure (H-Säure) und KK2 bedeutet bevorzugt den Rest von 1-Amino-8-hydroxynaphthalin-4,6-disulfonsäure (K-Säure).

Die Verbindungen der Formel (7) bzw. (7a), (8), (9), (10) und (11) sind bekannt oder können in an sich bekannter Weise erhalten werden. So können die Verbindungen der Formel (7) z.B. durch einfache Umsetzung eines Aminobenzoesäurechlorids bzw. Aminobenzolsulfochlorids mit dem entsprechenden Diaminobenzol bzw. Aminobenzolsulfonamid in üblicher Weise hergestellt werden.

Die neuen Verbindungen der Formel (1') sowie die Mischungen von Verbindungen der Formel (12a) bis (12d) sind faserreaktiv, d.h. sie vermögen mit den Hydroxylgruppen der Cellulose oder mit den reaktiven Zentren von natürlichen und synthetischen Polyamiden unter Bildung kovalenter chemischer Bindungen zu reagieren.

Die Reaktivfarbstoffe der Formel (1') sowie der Gemische von Verbindungen der Formel(12a) bis (12d) eignen sich zum Färben und Bedrucken der verschiedensten Materialien, insbesondere hydroxylgruppenhaltigen oder stickstoffhaltigen Fasermaterialien. Beispiele sind Seide, Leder, Wolle, Polyamidfasern und Polyurethane sowie insbesondere cellulosehaltige Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1') sowie (12a) bis (12d) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardverfahren, können bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1') sowie (12a) bis (12d) eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Überfärbe- und Schweissechtheiten, sowie eine gute Plissierechtheit, Bügelechtheit, Reibechtheit und insbesondere Chlorechtheit.

Die nachfolgenden Beispiele dienen der Erläuterung der Erfindung. Die Temperaturen sind in Celsiusgraden angegeben, Teile sind Gewichtsteile, und Prozentangaben beziehen sich auf Gew.-%, sofern nicht anders vermerkt. Gewichtsteile stehen zu Volumenteilen im Verhältnis von Kilogramm zu Liter.

### Herstellung der diazotierten Amine der Formel (10)

Beispiel 1: 28 Teile des Amins der Formel A₁-NH₂, worin A₁ der Rest der Formel 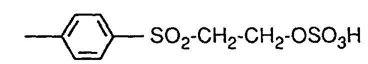 ist, werden in 150 Teile Wasser eingetragen und gut verrührt. Man gibt zu der erhaltenen Suspension 16 Teile konz. Salzsäure, kühlt auf 0-5°C und tropft langsam 7 Teile Natriumnitrit, gelöst in 25 Teilen Wasser, zu. Nachdem die Umsetzung des Amins zur entsprechenden Diazoverbindung komplett ist, wird das überschüssige Nitrit durch Zugabe von Sulfaminsäure zerstört.

Beispiele 2-4: Analog wie im Beispiel 1 beschrieben lassen sich die Diazoverbindungen von folgenden Aminen herstellen:

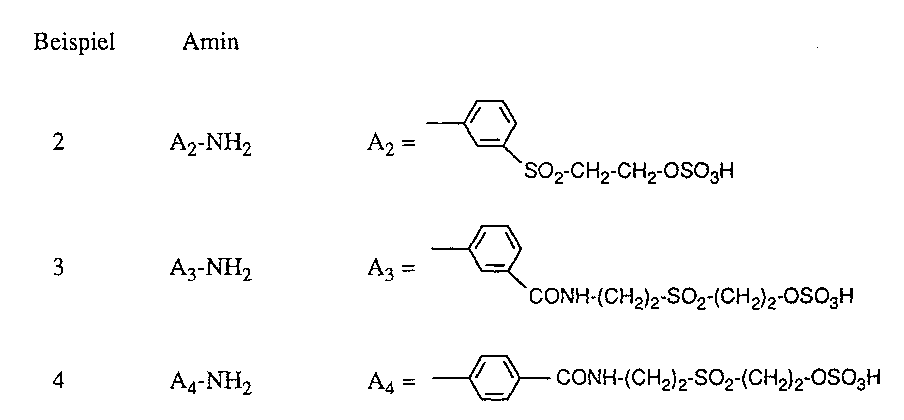

### Herstellung der tetrazotierten Verbindungen der Formel (7) bzw. (7a)

Beispiel 5: 19 Teile des Diamins der Formel H₂N - E₁ - NH₂, worin E₁ der Rest der Formel 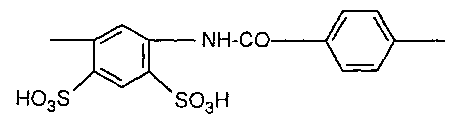 ist, werden in 190 Teilen Wasser neutral gelöst. Nach dem Abkühlen auf ca. 0°C werden 16 Teile konz. Salzsäure zugegeben. Anschliessend tropft man eine Lösung von 7 Teilen Natriumnitrit in 25 Teilen Wasser langsam zu. Nach erfolgter Umsetzung des Diamins zur entsprechenden Tetrazoverbindung wird das überschüssige Nitrit durch Zugabe von Sulfaminsäure zerstört.

Beispiele 6-10: Analog wie im Beispiel 5 beschrieben lassen sich die Tetrazoverbindungen von folgenden Diaminen herstellen:

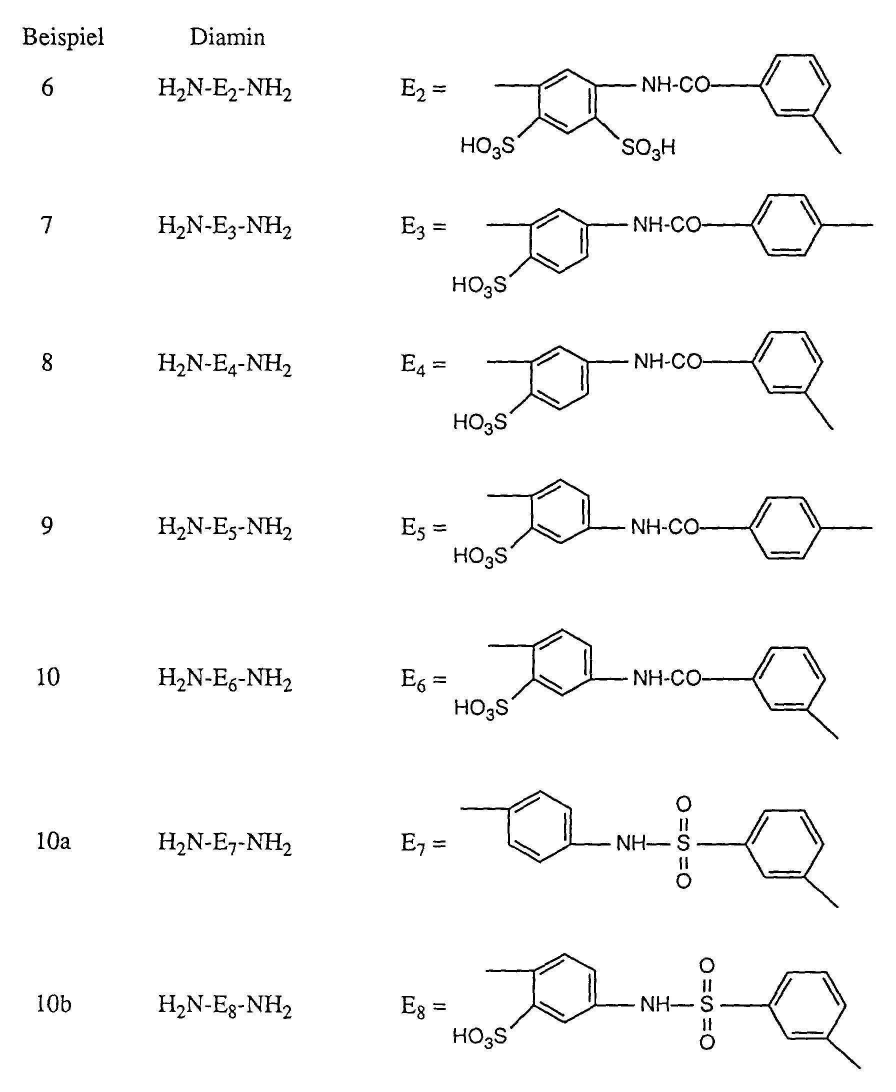

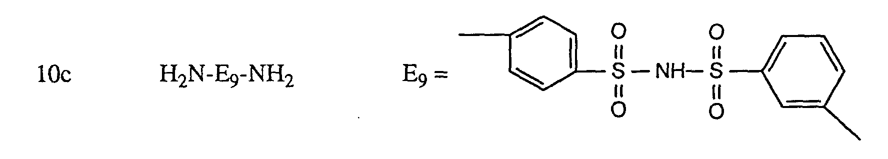

### Herstellung der Verbindungen der Formel (1)

Beispiel 11: Zu einer Suspension von 32 Teilen 1-Amino-8-hydroxynaphthalin-3,6-disulfonsäure (H-Säure) in 100 Teilen Wasser wird bei 0-5°C die gemäss Beispiel 1 erhaltene Lösung der Diazoverbindung des Amins der Formel A₁-NH₂ zugetropft. Man lässt anschliessend auf Raumtemperatur erwärmen und rührt bis zur vollständigen Kupplung. Danach wird das Reaktionsgemisch auf 5-10°C gekühlt, der pH-Wert mit Natriumhydroxidlösung auf 3-4 erhöht und die gemäss Beispiel 5 erhaltene Lösung der Tetrazoverbindung des Amins der Formel H₂N-E₁-NH₂ unter Konstanthaltung des pH-Werts bei 3-4 durch Zugabe von Natriumhydroxidlösung langsam zugetropft. Nach beendeter Kupplung wird die Farbstofflösung dialytisch von Salz befreit und im Vakuum eingedampft. Man erhält die Verbindung, die in Form der freien Säure der Formel 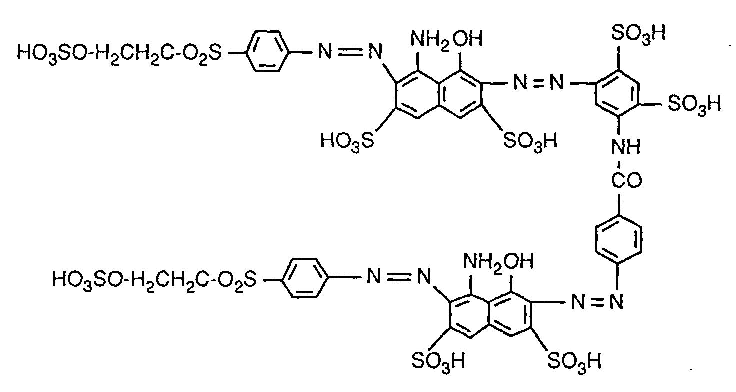 entspricht, als dunkles Pulver, welches Cellulose in marineblauen Tönen mit guten Allgemeinechtheiten färbt.

Beispiele 11a-11c: Verfährt man wie im Beispiel 11 beschrieben und verwendet anstelle der Lösung der Tetrazoverbindung des Amins der Formel H₂N-E₁-NH₂ eine äquivalente Menge der Lösung der Tetrazoverbindung gemäss Beispiel 10a, 10b oder 10c, werden die folgenden Verbindungen erhalten, die Cellulose ebenfalls in marineblauen Tönen mit guten Allgemeinechtheiten färben.

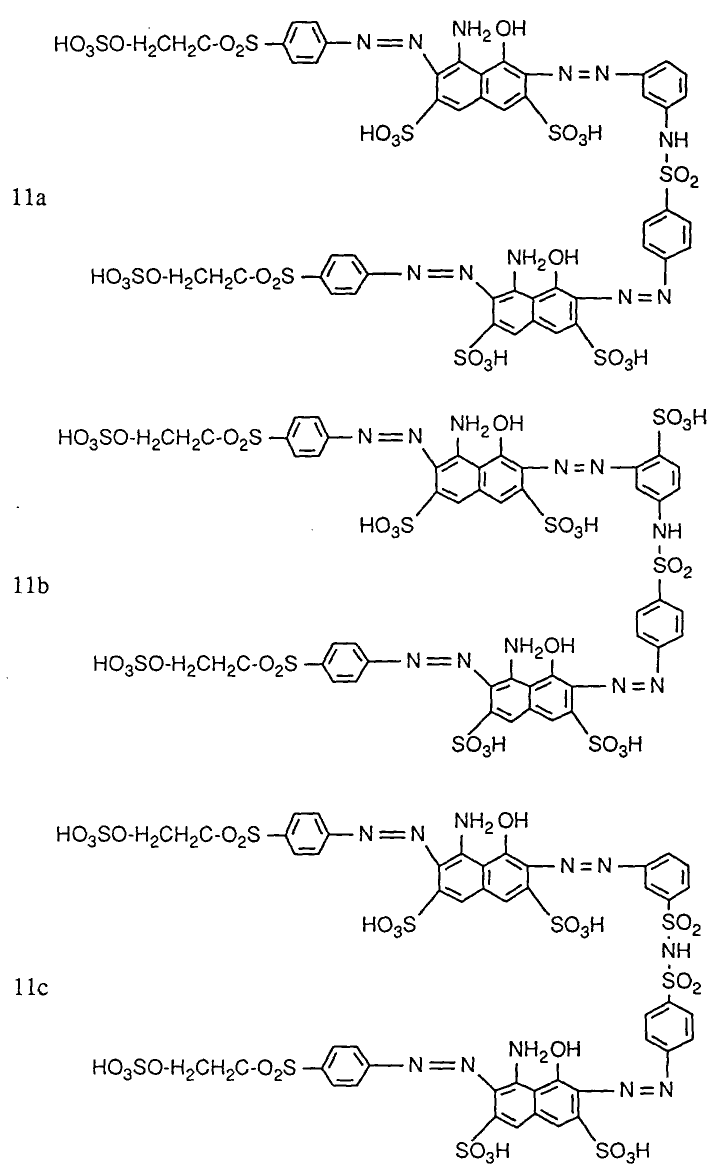

### Beispiele 12-34:

Analog wie im Beispiel 11 beschrieben lassen sich aus den in den Beispielen 1 bis 4 beschriebenen Diazoverbindungen und den in den Beispielen 5 bis 10 beschriebenen Tetrazoverbindungen die Farbstoffe der allgemeinen Formel 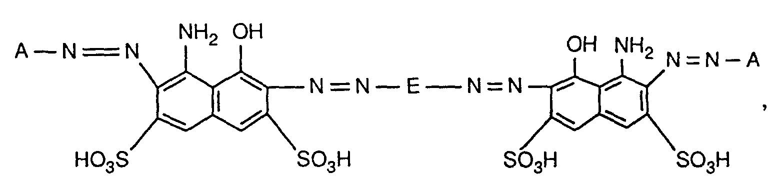 worin die Variablen die in der Tabelle 1 angegebene Bedeutung haben, herstellen, welche Cellulose ebenfalls in marineblauen Tönen mit guten Allgemeinechtheiten färben.

**Tabelle 1:**

| Beispiel Nr. | A | E |
|---|---|---|
| 12 | A₁ | E₂ |
| 13 | A₁ | E₃ |
| 14 | A₁ | E₄ |
| 15 | A₁ | E₅ |
| 16 | A₁ | E₆ |
| 17 | A₂ | E₁ |
| 18 | A₂ | E₂ |
| 19 | A₂ | E₃ |
| 20 | A₂ | E₄ |
| 21 | A₂ | E₅ |
| 22 | A₂ | E₆ |
| 23 | A₃ | E₁ |
| 24 | A₃ | E₂ |
| 25 | A₃ | E₃ |
| 26 | A₃ | E₄ |
| 27 | A₃ | E₅ |
| 28 | A₃ | E₆ |
| 29 | A₄ | E₁ |
| 30 | A₄ | E₂ |
| 31 | A₄ | E₃ |
| 32 | A₄ | E₄ |
| 33 | A₄ | E₅ |
| 34 | A₄ | E₆ |

In der Tabelle 1 haben die Reste A₁-A₄ und E₁-E₆ jeweils die in den Beispielen 1 bis 10 angegebene Bedeutung.

Beispiel 35: Zu einer Suspension von 32 Teilen 1-Amino-8-hydroxynaphthalin-3,6-disulfonsäure (H-Säure) in 100 Teilen Wasser wird bei 0-5°C die gemäss Beispiel 5 erhaltene Lösung der Tetrazoverbindung des Amins der Formel H₂N-E₁-NH₂ zugetropft. Man lässt anschliessend auf Raumtemperatur erwärmen und rührt bis zur vollständigen Kupplung. Danach wird das Reaktionsgemisch auf 5-10°C gekühlt, der pH-Wert mit Natriumhydroxidlösung auf 3-4 erhöht und die gemäss Beispiel 1 erhaltene Lösung der Diazoverbindung des Amins der Formel A₁-NH₂ unter Konstanthaltung des pH-Werts bei 3-4 durch Zugabe von Natriumhydroxidlösung langsam zugetropft. Nach beendeter Kupplung wird die Farbstofflösung dialytisch von Salz befreit und im Vakuum eingedampft. Man erhält die Verbindung, die in Form der freien Säure der Formel 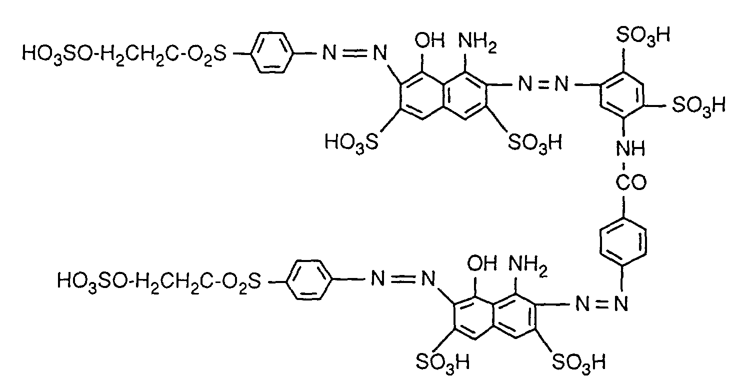 entspricht, als dunkles Pulver, welches Cellulose in marineblauen Tönen mit guten Allgemeinechtheiten färbt.

Beispiele 36-58: Analog wie im Beispiel 35 beschrieben lassen sich aus den in den Beispielen 1 bis 4 beschriebenen Diazoverbindungen und den in den Beispielen 5 bis 10 beschriebenen Tetrazoverbindungen die Farbstoffe der allgemeinen Formel 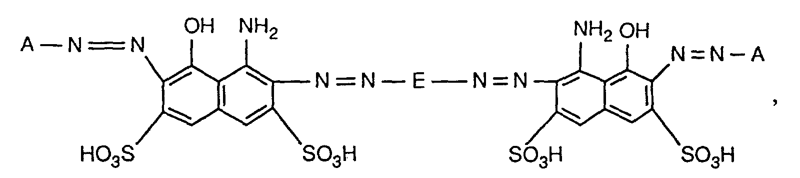 worin die Variablen die in der Tabelle 2 angegebene Bedeutung haben, herstellen, welche Cellulose ebenfalls in marineblauen Tönen mit guten Allgemeinechtheiten färben.

**Tabelle 2:**

| Beispiel Nr. | A | E |
|---|---|---|
| 36 | A₁ | E₂ |
| 37 | A₁ | E₃ |
| 38 | A₁ | E₄ |
| 39 | A₁ | E₅ |
| 40 | A₁ | E₆ |
| 41 | A₂ | E₁ |
| 42 | A₂ | E₂ |
| 43 | A₂ | E₃ |
| 44 | A₂ | E₄ |
| 45 | A₂ | E₅ |
| 46 | A₂ | E₆ |
| 47 | A₃ | E₁ |
| 48 | A₃ | E₂ |
| 49 | A₃ | E₃ |
| 50 | A₃ | E₄ |
| 51 | A₃ | E₅ |
| 52 | A₃ | E₆ |
| 53 | A₄ | E₁ |
| 54 | A₄ | E₂ |
| 55 | A₄ | E₃ |
| 56 | A₄ | E₄ |
| 57 | A₄ | E₅ |
| 58 | A₄ | E₆ |

In der Tabelle 2 haben die Reste A₁-A₄ und E₁-E₆ jeweils die in den Beispielen 1 bis 10 angegebene Bedeutung.

Beispiel 59: Zu einer Suspension von 32 Teilen 1-Amino-8-hydroxynaphthalin-4,6-disulfonsäure (K-Säure) in 100 Teilen Wasser wird bei 0-5°C die gemäss Beispiel 1 erhaltene Lösung der Diazoverbindung des Amins der Formel A₁-NH₂ zugetropft. Man lässt anschliessend auf Raumtemperatur erwärmen und rührt bis zur vollständigen Kupplung. Danach wird das Reaktionsgemisch auf 5-10°C gekühlt, der pH-Wert mit Natriumhydroxidlösung auf 3-4 erhöht und die gemäss Beispiel 5 erhaltene Lösung der Tetrazoverbindung des Amins der Formel H₂N-E₁-NH₂ unter Konstanthaltung des pH-Werts bei 3-4 durch Zugabe von Natriumhydroxidlösung langsam zugetropft. Nach beendeter Kupplung wird die Farbstofflösung dialytisch von Salz befreit und im Vakuum eingedampft. Man erhält die Verbindung, die in Form der freien Säure der Formel 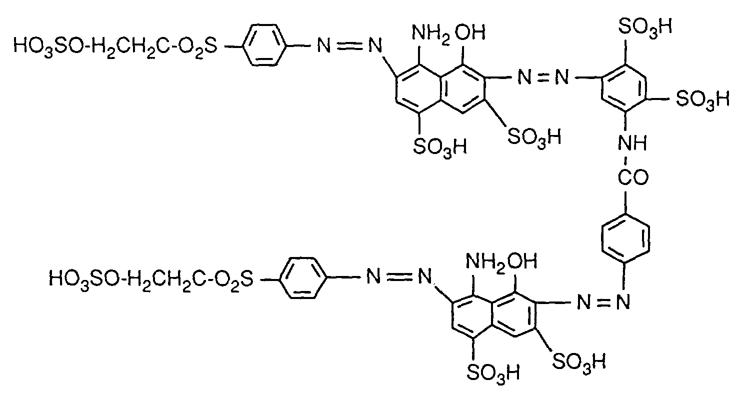 entspricht, als dunkles Pulver, welches Cellulose in marineblauen Tönen mit guten Allgemeinechtheiten färbt.

Beispiele 60-82: Analog wie im Beispiel 59 beschrieben lassen sich aus den in den Beispielen 1 bis 4 beschriebenen Diazoverbindungen und den in den Beispielen 5 bis 10 beschriebenen Tetrazoverbindungen die Farbstoffe der allgemeinen Formel 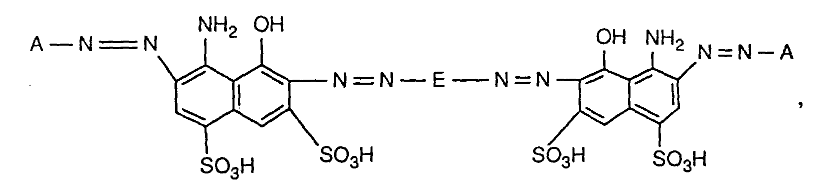 worin die Variablen die in der Tabelle 3 angegebene Bedeutung haben, herstellen, welche Cellulose ebenfalls in marineblauen Tönen mit guten Allgemeinechtheiten färben.

**Tabelle 3:**

| Beispiel Nr. | A | E |
|---|---|---|
| 60 | A₁ | E₂ |
| 61 | A₁ | E₃ |
| 62 | A₁ | E₄ |
| 63 | A₁ | E₅ |
| 64 | A₁ | E₆ |
| 65 | A₂ | E₁ |
| 66 | A₂ | E₂ |
| 67 | A₂ | E₃ |
| 68 | A₂ | E₄ |
| 69 | A₂ | E₅ |
| 70 | A₂ | E₆ |
| 71 | A₃ | E₁ |
| 72 | A₃ | E₂ |
| 73 | A₃ | E₃ |
| 74 | A₃ | E₄ |
| 75 | A₃ | E₅ |
| 76 | A₃ | E₆ |
| 77 | A₄ | E₁ |
| 78 | A₄ | E₂ |
| 79 | A₄ | E₃ |
| 80 | A₄ | E₄ |
| 81 | A₄ | E₅ |
| 82 | A₄ | E₆ |

In der Tabelle 3 haben die Reste A₁-A₄ und E₁-E₆ jeweils die in den Beispielen 1 bis 10 angegebene Bedeutung.

Beispiel 83: Zu einer Suspension von 32 Teilen 1-Amino-8-hydroxynaphthalin-4,6-disulfonsäure (K-Säure) in 100 Teilen Wasser wird bei 0-5°C die gemäss Beispiel 5 erhaltene Lösung der Tetrazoverbindung des Amins der Formel H₂N-E₁-NH₂ zugetropft. Man lässt anschliessend auf Raumtemperatur erwärmen und rührt bis zur vollständigen Kupplung. Danach wird das Reaktionsgemisch auf 5-10°C gekühlt, der pH-Wert mit Natriumhydroxidlösung auf 3-4 erhöht und die gemäss Beispiel 1 erhaltene Lösung der Diazoverbindung des Amins der Formel A₁-NH₂ unter Konstanthaltung des pH-Werts bei 3-4 durch Zugabe von Natriumhydroxidlösung langsam zugetropft. Nach beendeter Kupplung wird die Farbstofflösung dialytisch von Salz befreit und im Vakuum eingedampft. Man erhält die Verbindung, die in Form der freien Säure der Formel 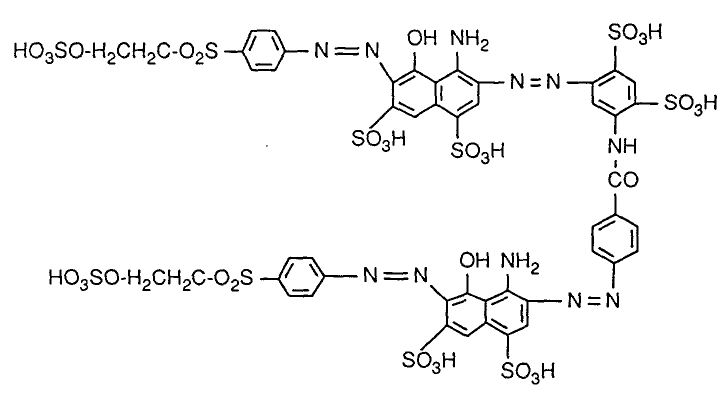 entspricht, als dunkles Pulver, welches Cellulose in marineblauen Tönen mit guten Allgemeinechtheiten färbt.

Beispiele 84-106: Analog wie im Beispiel 83 beschrieben lassen sich aus den in den Beispielen 1 bis 4 beschriebenen Diazoverbindungen und den in den Beispielen 5 bis 10 beschriebenen Tetrazoverbindungen die Farbstoffe der allgemeinen Formel 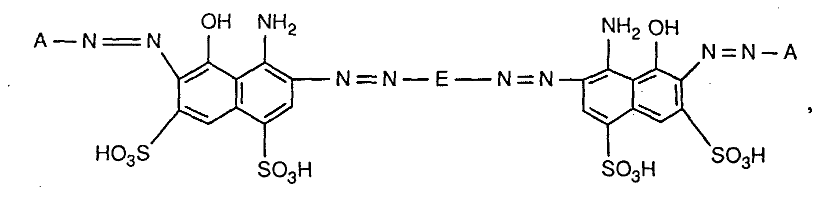 worin die Variablen die in der Tabelle 4 angegebene Bedeutung haben, herstellen, welche Cellulose ebenfalls in marineblauen Tönen mit guten Allgemeinechtheiten färben.

**Tabelle 4:**

| Beispiel Nr. | A | E |
|---|---|---|
| 84 | A₁ | E₂ |
| 85 | A₁ | E₃ |
| 86 | A₁ | E₄ |
| 87 | A₁ | E₅ |
| 88 | A₁ | E₆ |
| 89 | A₂ | E₁ |
| 90 | A₂ | E₂ |
| 91 | A₂ | E₃ |
| 92 | A₂ | E₄ |
| 93 | A₂ | E₅ |
| 94 | A₂ | E₆ |
| 95 | A₃ | E₁ |
| 96 | A₃ | E₂ |
| 97 | A₃ | E₃ |
| 98 | A₃ | E₄ |
| 99 | A₃ | E₅ |
| 100 | A₃ | E₆ |
| 101 | A₄ | E₁ |
| 102 | A₄ | E₂ |
| 103 | A₄ | E₃ |
| 104 | A₄ | E₄ |
| 105 | A₄ | E₅ |
| 106 | A₄ | E₆ |

In der Tabelle 4 haben die Reste A₁-A₄ und E₁-E₆ jeweils die in den Beispielen 1 bis 10 angegebene Bedeutung.

Beispiel 107: 35 Teile des Amins der Formel A₅-NH₂, worin A₅ der Rest der Formel 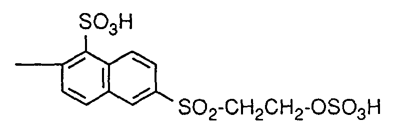 ist, werden in 200 Teile Wasser eingetragen und gut verrührt. Man gibt zu der erhaltenen Suspension 16 Teile konz. Salzsäure, kühlt auf 0-5°C und tropft langsam 7 Teile Natriumnitrit, gelöst in 25 Teilen Wasser, zu. Nach vollständiger Umsetzung des Amins zur entsprechenden Diazoverbindung wird das überschüssige Nitrit durch Zugabe von Sulfaminsäure zerstört.

Beispiele 108-109: Analog wie im Beispiel 107 beschrieben lassen sich die Diazoverbindungen von folgenden Aminen herstellen:

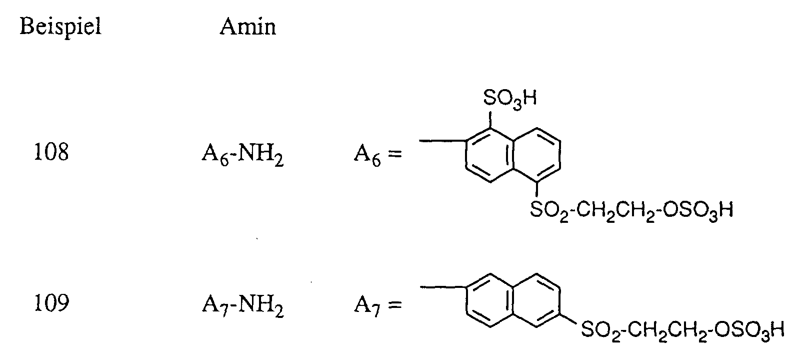

Beispiel 110: Zu einer Suspension von 32 Teilen 1-Amino-8-hydroxynaphthalin-3,6-disulfonsäure (H-Säure) in 100 Teilen Wasser wird bei 0-5°C die gemäss Beispiel 5 erhaltene Lösung der Tetrazoverbindung des Amins der Formel H₂N-E₁-NH₂ zugetropft. Man lässt anschliessend auf Raumtemperatur erwärmen und rührt bis zur vollständigen Kupplung. Danach wird das Reaktionsgemisch auf 5-10°C gekühlt, der pH-Wert mit Natriumhydroxidlösung auf 3-4 erhöht und die gemäss Beispiel 107 erhaltene Lösung der Diazoverbindung des Amins der Formel A₅-NH₂ unter Konstanthaltung des pH-Werts bei 3-4 durch Zugabe von Natriumhydroxidlösung langsam zugetropft. Nach beendeter Kupplung wird die Farbstofflösung dialytisch von Salz befreit und im Vakuum eingedampft. Man erhält die Verbindung, die in Form der freien Säure der Formel 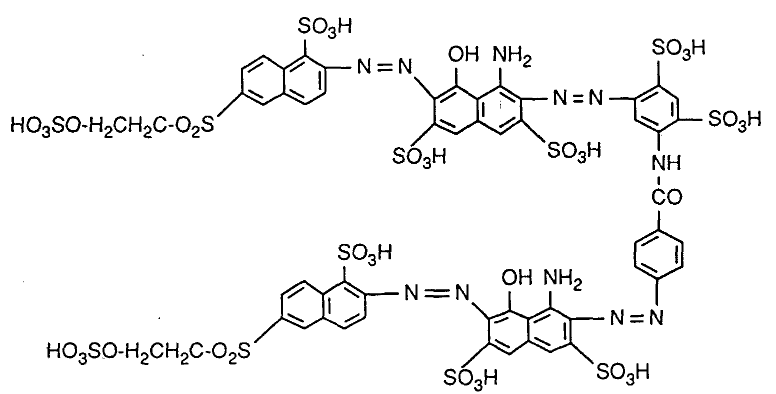 entspricht, als dunkles Pulver, welches Cellulose in marineblauen Tönen mit guten Allgemeinechtheiten färbt.

Beispiele 111-115: Analog wie im Beispiel 110 beschrieben lassen sich aus der im Beispiel 107 beschriebenen Diazoverbindung und den in den Beispielen 6 bis 10 beschriebenen Tetrazoverbindungen die Farbstoffe der allgemeinen Formel 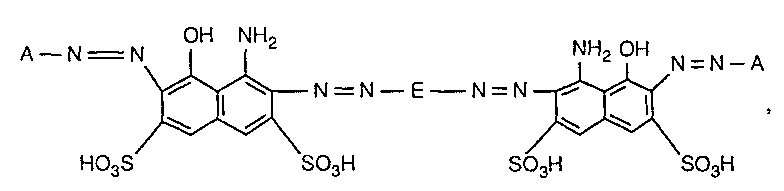 worin die Variablen die in der Tabelle 5 angegebene Bedeutung haben, herstellen, welche Cellulose ebenfalls in marineblauen Tönen mit guten Allgemeinechtheiten färben.

**Tabelle 5:**

| Beispiel Nr. | A | E |
|---|---|---|
| 111 | A₅ | E₂ |
| 112 | A₅ | E₃ |
| 113 | A₅ | E₄ |
| 114 | A₅ | E₅ |
| 115 | A₅ | E₆ |

In der Tabelle 5 haben die Reste A₅ und E₂-E₆ jeweils die in den Beispielen 6 bis 10 und 107 angegebene Bedeutung.

Beispiele 116-121: Verfährt man wie in den Beispielen 110 bis 115 beschrieben und verwendet anstelle von H-Säure die äquivalente Menge K-Säure, erhält man die Verbindungen der allgemeinen Formel 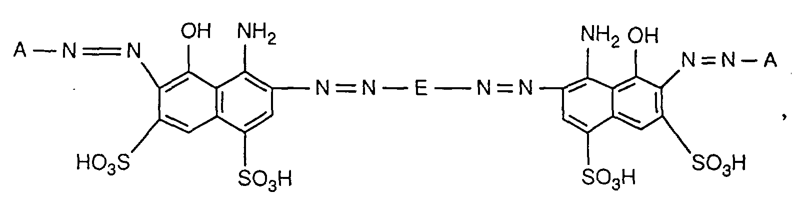 worin die Variablen die in der Tabelle 6 angegebene Bedeutung haben, und welche Cellulose ebenfalls in marineblauen Tönen mit guten Allgemeinechtheiten färben.

**Tabelle 6:**

| Beispiel Nr. | A | E |
|---|---|---|
| 116 | A₅ | E₁ |
| 117 | A₅ | E₂ |
| 118 | A₅ | E₃ |
| 119 | A₅ | E₄ |
| 120 | A₅ | E₅ |
| 121 | A₅ | E₆ |

In der Tabelle 6 haben die Reste A₅ und E₁-E₆ jeweils die in den Beispielen 5 bis 10 und 107 angegebene Bedeutung.

Beispiel 122: Zu einer Suspension von 32 Teilen 1-Amino-8-hydroxynaphthalin--3,6-disulfonsäure (H-Säure) in 100 Teilen Wasser wird bei 0-5°C die gemäss Beispiel 5 erhaltene Lösung der Tetrazoverbindung des Amins der Formel H₂N-E₁-NH₂ zugetropft. Man lässt anschliessend auf Raumtemperatur erwärmen und rührt bis zur vollständigen Kupplung. Danach wird das Reaktionsgemisch auf 5-10°C gekühlt, der pH-Wert mit Natriumhydroxidlösung auf 3-4 erhöht und die gemäss Beispiel 108 erhaltene Lösung der Diazoverbindung des Amins der Formel A₆-NH₂ unter Konstanthaltung des pH-Werts bei 3-4 durch Zugabe von Natriumhydroxidlösung langsam zugetropft. Nach beendeter Kupplung wird die Farbstofflösung dialytisch von Salz befreit und im Vakuum eingedampft. Man erhält die Verbindung, die in Form der freien Säure der Formel 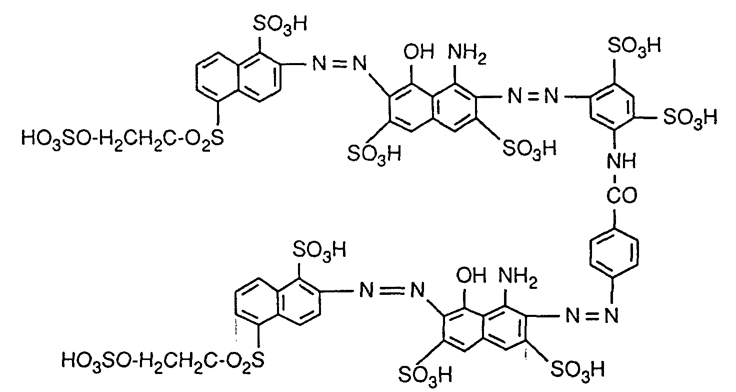 entspricht, als dunkles Pulver, welches Cellulose in marineblauen Tönen mit guten Allgemeinechtheiten färbt.

Beispiele 123-127: Analog wie im Beispiel 122 beschrieben lassen sich aus der im Beispiel 108 beschriebenen Diazoverbindung und den in den Beispielen 6 bis 10 beschriebenen Tetrazoverbindungen die Farbstoffe der allgemeinen Formel 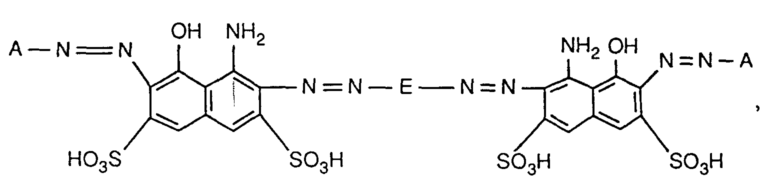 worin die Variablen die in der Tabelle 7 angegebene Bedeutung haben, herstellen, welche Cellulose ebenfalls in marineblauen Tönen mit guten Allgemeinechtheiten färben.

**Tabelle 7:**

| Beispiel Nr. | A | E |
|---|---|---|
| 123 | A₆ | E₂ |
| 124 | A₆ | E₃ |
| 125 | A₆ | E₄ |
| 126 | A₆ | E₅ |
| 127 | A₆ | E₆ |

In der Tabelle 7 haben die Reste A₆ und E₂-E₆ jeweils die in den Beispielen 6 bis 10 und 108 angegebene Bedeutung.

Beispiele 128-133: Verfährt man wie in den Beispielen 122 bis 127 beschrieben und verwendet anstelle von H-Säure die äquivalente Menge K-Säure, erhält man die Verbindungen der allgemeinen Formel 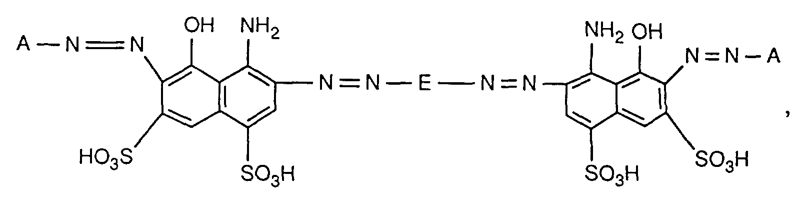 worin die Variablen die in der Tabelle 8 angegebene Bedeutung haben, und welche Cellulose ebenfalls in marineblauen Tönen mit guten Allgemeinechtheiten färben.

**Tabelle 8:**

| Beispiel Nr. | A | E |
|---|---|---|
| 128 | A₆ | E₁ |
| 129 | A₆ | E₂ |
| 130 | A₆ | E₃ |
| 131 | A₆ | E₄ |
| 132 | A₆ | E₅ |
| 133 | A₆ | E₆ |

In der Tabelle 8 haben die Reste A₆ und E₁-E₆ jeweils die in den Beispielen 5 bis 10 und 108 angegebene Bedeutung.

Beispiel 134: Zu einer Suspension von 32 Teilen 1-Amino-8-hydroxynaphthalin--3,6-disulfonsäure (H-Säure) in 100 Teilen Wasser wird bei 0-5°C die gemäss Beispiel 5 erhaltene Lösung der Tetrazoverbindung des Amins der Formel H₂N-E₁-NH₂ zugetropft. Man lässt anschliessend auf Raumtemperatur erwärmen und rührt bis zur vollständigen Kupplung. Danach wird das Reaktionsgemisch auf 5-10°C gekühlt, der pH-Wert mit Natriumhydroxidlösung auf 3-4 erhöht und die gemäss Beispiel 109 erhaltene Lösung der Diazoverbindung des Amins der Formel A₇-NH₂ unter Konstanthaltung des pH-Werts bei 3-4 durch Zugabe von Natriumhydroxidlösung langsam zugetropft. Nach beendeter Kupplung wird die Farbstofflösung dialytisch von Salz befreit und im Vakuum eingedampft. Man erhält die Verbindung, die in Form der freien Säure der Formel 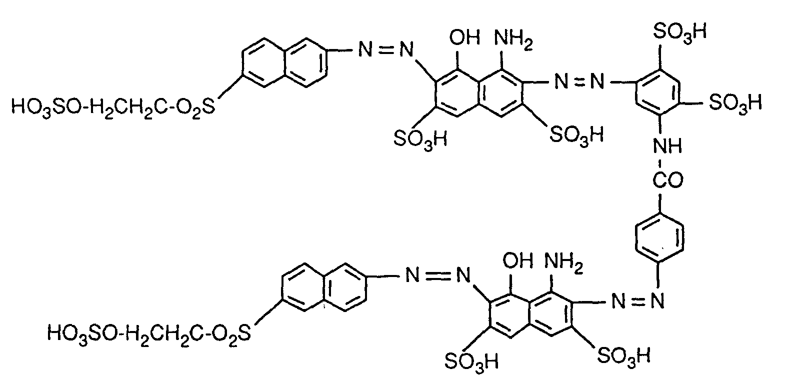 entspricht, als dunkles Pulver, welches Cellulose in marineblauen Tönen mit guten Allgemeinechtheiten färbt.

Beispiele 135-139: Analog wie im Beispiel 134 beschrieben lassen sich aus der im Beispiel 109 beschriebenen Diazoverbindung und den in den Beispielen 6 bis 10 beschriebenen Tetrazoverbindungen die Farbstoffe der allgemeinen Formel 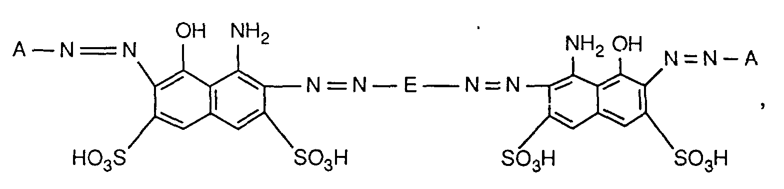 worin die Variablen die in der Tabelle 9 angegebene Bedeutung haben, herstellen, welche Cellulose ebenfalls in marineblauen Tönen mit guten Allgemeinechtheiten färben.

**Tabelle 9:**

| Beispiel Nr. | A | E |
|---|---|---|
| 135 | A₇ | E₂ |
| 136 | A₇ | E₃ |
| 137 | A₇ | E₄ |
| 138 | A₇ | E₅ |
| 139 | A₇ | E₆ |

In der Tabelle 9 haben die Reste A₇ und E₂-E₆ jeweils die in den Beispielen 6 bis 10 und 109 angegebene Bedeutung.

Beispiele 140-145: Verfährt man wie in den Beispielen 134 bis 139 beschrieben und verwendet anstelle von H-Säure die äquivalente Menge K-Säure, erhält man die Verbindungen der allgemeinen Formel 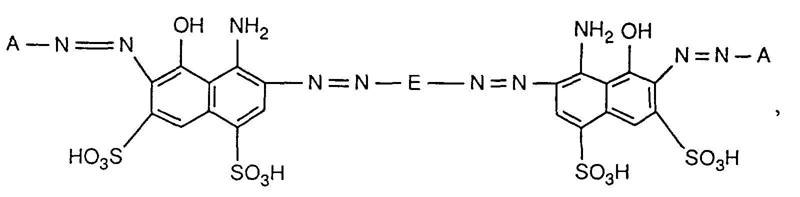 worin die Variablen die in der Tabelle 10 angegebene Bedeutung haben, und welche Cellulose ebenfalls in marineblauen Tönen mit guten Allgemeinechtheiten färben.

**Tabelle 10:**

| Beispiel Nr. | A | E |
|---|---|---|
| 140 | A₇ | E₁ |
| 141 | A₇ | E₂ |
| 142 | A₇ | E₃ |
| 143 | A₇ | E₄ |
| 144 | A₇ | E₅ |
| 145 | A₇ | E₆ |

In der Tabelle 10 haben die Reste A₇ und E₁-E₆ jeweils die in den Beispielen 5 bis 10 und 109 angegebene Bedeutung.

Beispiel 146: Zu einer Suspension von 32 Teilen 1-Amino-8-hydroxynaphthalin--3,6-disulfonsäure (H-Säure) in 100 Teilen Wasser wird bei 0-5°C die gemäss Beispiel 109 erhaltene Lösung der Diazoverbindung des Amins der Formel A₇-NH₂ zugetropft. Man lässt anschliessend auf Raumtemperatur erwärmen und rührt bis zur vollständigen Kupplung. Danach wird das Reaktionsgemisch auf 5-10°C gekühlt, der pH-Wert mit Natriumhydroxidlösung auf 3-4 erhöht und die gemäss Beispiel 5 erhaltene Lösung der Tetrazoverbindung des Amins der Formel H₂N-E₁-NH₂ unter Konstanthaltung des pH-Werts bei 3-4 durch Zugabe von Natriumhydroxidlösung langsam zugetropft. Nach beendeter Kupplung wird die Farbstofflösung dialytisch von Salz befreit und im Vakuum eingedampft. Man erhält die Verbindung, die in Form der freien Säure der Formel 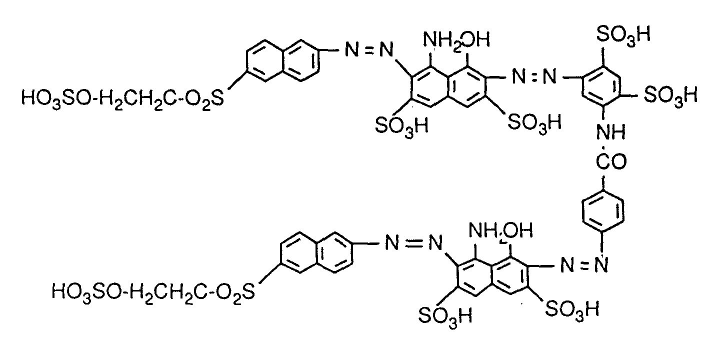 entspricht, als dunkles Pulver, welches Cellulose in marineblauen Tönen mit guten Allgemeinechtheiten färbt.

Beispiele 147-151: Analog wie im Beispiel 146 beschrieben lassen sich aus der im Beispiel 109 beschriebenen Diazoverbindung und den in den Beispielen 6 bis 10 beschriebenen Tetrazoverbindungen die Farbstoffe der allgemeinen Formel 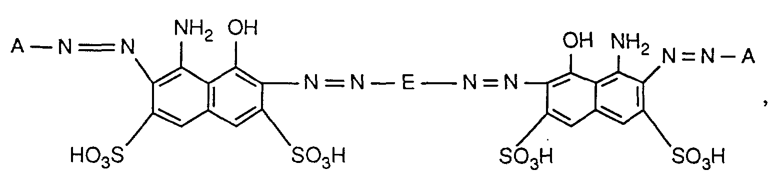 worin die Variablen die in der Tabelle 11 angegebene Bedeutung haben, herstellen, welche Cellulose ebenfalls in marineblauen Tönen mit guten Allgemeinechtheiten färben.

**Tabelle 11:**

| Beispiel Nr. | A | E |
|---|---|---|
| 147 | A₇ | E₂ |
| 148 | A₇ | E₃ |
| 149 | A₇ | E₄ |
| 150 | A₇ | E₅ |
| 151 | A₇ | E₆ |

In der Tabelle 11 haben die Reste A₇ und E₂-E₆ jeweils die in den Beispielen 6 bis 10 und 109 angegebene Bedeutung.

Beispiele 152-157: Verfährt man wie in den Beispielen 146 bis 151 beschrieben und verwendet anstelle von H-Säure die äquivalente Menge K-Säure, erhält man die Verbindungen der allgemeinen Formel 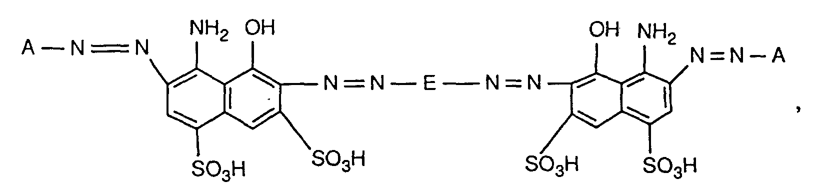 worin die Variablen die in der Tabelle 12 angegebene Bedeutung haben, und welche Cellulose ebenfalls in marineblauen Tönen mit guten Allgemeinechtheiten färben.

**Tabelle 12:**

| Beispiel Nr. | A | E |
|---|---|---|
| 152 | A₇ | E₁ |
| 153 | A₇ | E₂ |
| 154 | A₇ | E₃ |
| 155 | A₇ | E₄ |
| 156 | A₇ | E₅ |
| 157 | A₇ | E₆ |

In der Tabelle 12 haben die Reste A₇ und E₁-E₆ jeweils die in den Beispielen 5 bis 10 und 109 angegebene Bedeutung.

Beispiel 158: Zu einer Suspension von (32 - n) Teilen H-Säure und n Teilen K-Säure (n = 1-31) in 100 Teilen Wasser wird bei 0-5°C die gemäss Beispiel 1 erhaltene Lösung der Diazoverbindung des Amins der Formel A₁-NH₂ zugetropft. Man lässt anschliessend auf Raumtemperatur erwärmen und rührt bis zur vollständigen Kupplung. Danach wird das Reaktionsgemisch auf 5-10°C gekühlt, der pH-Wert mit Natriumhydroxidlösung auf 3-4 erhöht und die gemäss Beispiel 5 erhaltene Lösung der Tetrazoverbindung des Amins der Formel H₂N-E₁-NH₂ unter Konstanthaltung des pH-Werts bei 3-4 durch Zugabe von Natriumhydroxidlösung langsam zugetropft. Nach beendeter Kupplung wird die Farbstofflösung dialytisch von Salz befreit und im Vakuum eingedampft. Man erhält ein Gemisch der Verbindungen der Formel 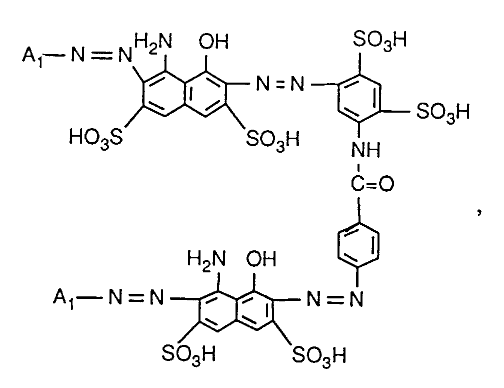 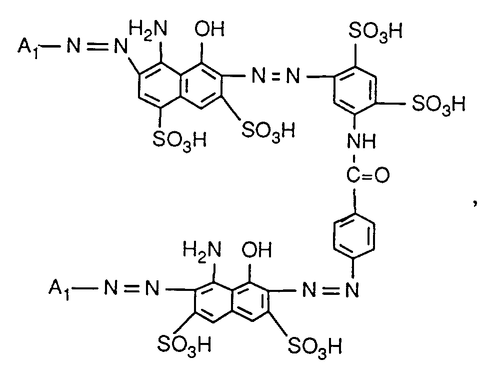 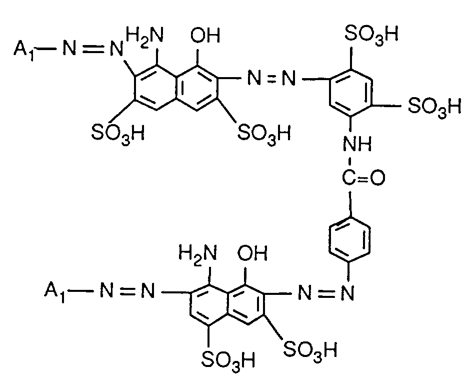 und 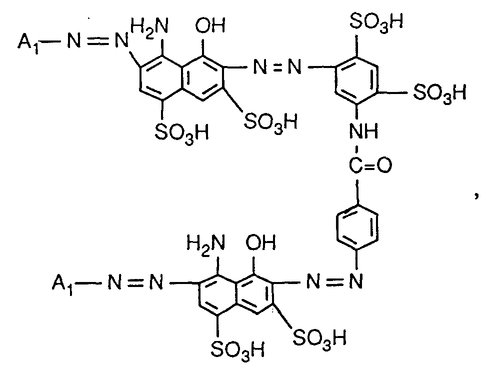 welches Cellulose in marineblauen Tönen mit guten Allgemeinechtheiten färbt.

Beispiel 159: Zu einer Suspension von (32 - n) Teilen H-Säure und n Teilen K-Säure (n = 1-31) in 100 Teilen Wasser wird bei 0-5°C die gemäss Beispiel 5 erhaltene Lösung der Tetrazoverbindung des Amins der Formel H₂N-E₁-NH₂ zugetropft. Man lässt anschliessend auf Raumtemperatur erwärmen und rührt bis zur vollständigen Kupplung. Danach wird das Reaktionsgemisch auf 5-10°C gekühlt, der pH-Wert mit Natriumhydroxidlösung auf 3-4 erhöht und die gemäss Beispiel 1 erhaltene Lösung der Diazoverbindung des Amins der Formel A₁-NH₂ unter Konstanthaltung des pH-Werts bei 3-4 durch Zugabe von Natriumhydroxidlösung langsam zugetropft. Nach beendeter Kupplung wird die Farbstofflösung dialytisch von Salz befreit und im Vakuum eingedampft. Man erhält ein Gemisch der Verbindungen der Formel 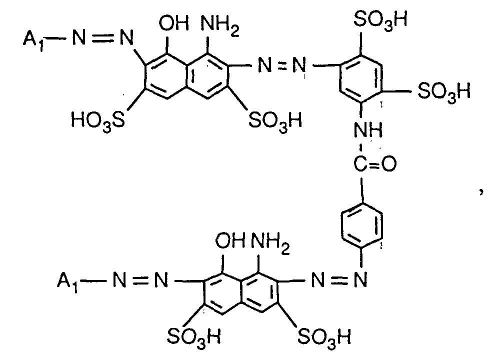 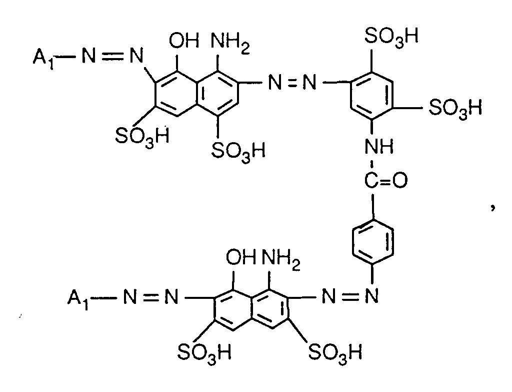 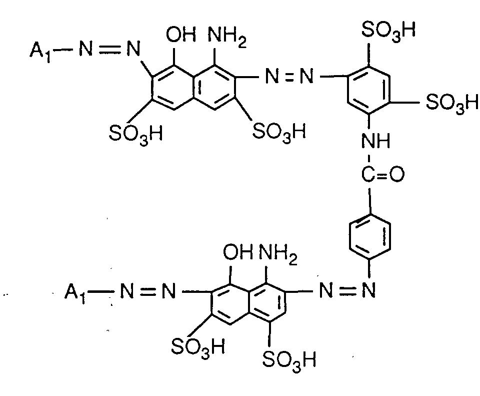 und 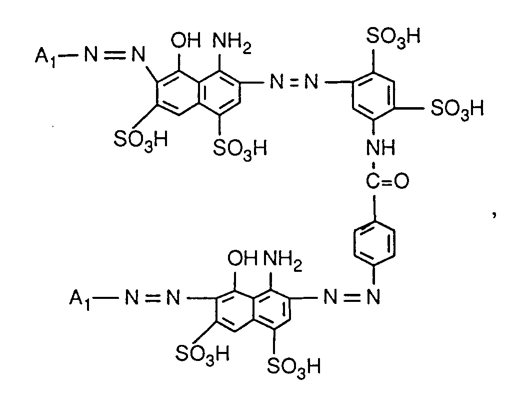 welches Cellulose in marineblauen Tönen mit guten Allgemeinechtheiten färbt.

Färbevorschrift I 2 Teile des gemäss Beispiel 11 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

Färbevorschrift II 2 Teile des gemäss Beispiel 11 erhaltenen Reaktivfarbstoffes werden in 400 Teilen Wasser gelöst; dazu gibt man 1500 Teile einer Lösung die pro Liter 53 g Natriumchlorid enthält. In dieses Färbebad geht man bei 35°C mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35°C gehalten. Danach wird die Temperatur innerhalb von 20 Minuten auf 60°C erhöht. Die Temperatur wird weitere 35 Minuten bei 60°C gehalten. Danach wird gespült, während einer Viertelstunde mit einem nichtionogenen Waschmittel kochend geseift, nochmals gespült und getrocknet.

Färbevorschrift III 8 Teile des gemäss Beispiel 11 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25°C mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb von 10 Minuten auf 60°C erhöht. Die Temperatur wird weitere 90 Minuten auf 60°C gehalten. Danach wird gespült, während einer Viertelstunde mit einem nichtionogenen Waschmittel kochend geseift, nochmals gespült und getrocknet.

Färbevorschrift IV 4 Teile des gemäss Beispiel 11 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70 % seines Gewichts zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V 6 Teile des gemäss Beispiel 11 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38°bé) enthält. Mit der erhaltenen Lösung wird ein Baumwollgewebe foulardiert, so dass es um 70 % seines Gewichts zunimmt, und dann auf eine Kaule aufgewickelt. Das Baumwollgewebe wird so während 10 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI 2 Teile des gemäss Beispiel 11 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichts zunimmt, und dann getrocknet. Dann imprägniert man das Gewebe mit einer 20°C warmen Lösung, die pro Liter 4 g Natriumhydroxyd und 300 g Natriumchlorid enthält, quetscht auf 75 % Gewichtszunahme ab, dämpft die Färbung während 30 Sekunden bei 100 bis 102°C, spült, seift während einer Viertelstunde in einer 0,3%igen kochenden Lösung eines nichtionogenen Waschmittels, spült und trocknet.

Druckvorschrift I 3 Teile des gemäss Beispiel 11 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

Druckvorschrift II 5 Teile des gemäss Beispiel 11 erhaltenen Reaktivfarbstoffes werden unter schnellem Rühren in 100 Teile einer Stammverdickung, enthaltend 50 Teile 5%ige Natriumalginverdickung, 36,5 Teile Wasser, 10 Teile Harnstoff, 1 Teil m-nitrobenzolsulfonsaures Natrium sowie 2,5 Teile Natriumhydrogencarbonat, eingestreut. Mit der so erhaltenen Druckpaste, deren Stabilität den technischen Anforderungen entspricht, bedruckt man ein Baumwollgewebe, trocknet und dämpft den erhaltenen bedruckten Stoff 8 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Verbindungen der Formel 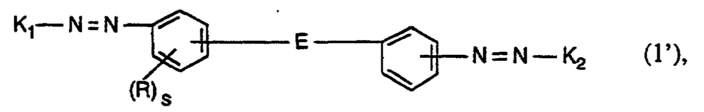 worin E für die Gruppe -NH-CO-, -NH-SO₂- oder -SO₂-NH-SO₂- steht, (R)ₛ für s gleiche oder verschiedene Substituenten aus der Gruppe Sulfo, Hydroxy, C₁-C₄-Alkyl, C₁-C₄-Alkoxy, Halogen und Cyano steht,
s die Zahl 0, 1 oder 2 bedeutet,
K₁ und K₂ unabhängig voneinander je für einen Rest der Formel 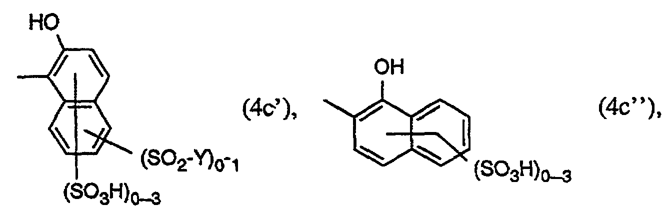 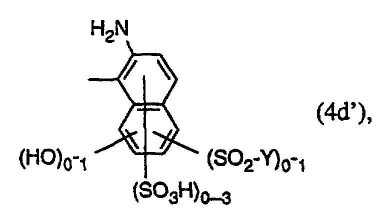 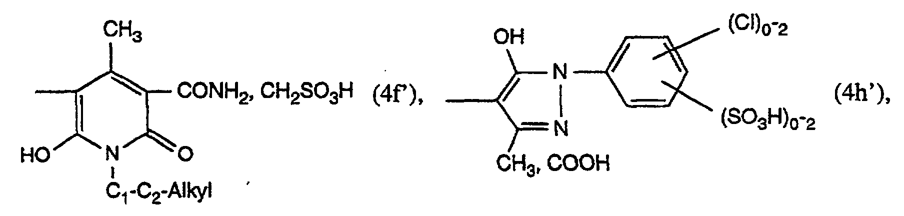 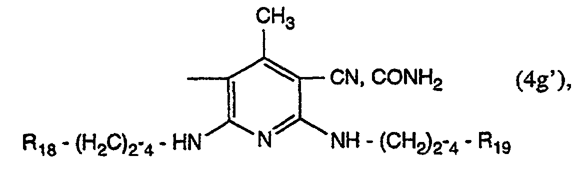 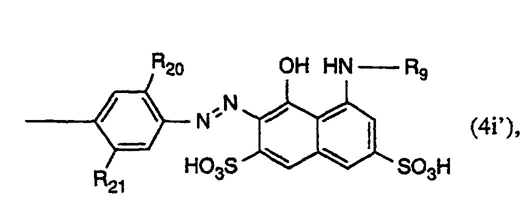 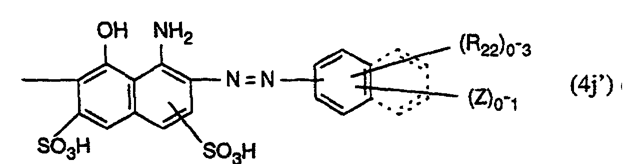 oder 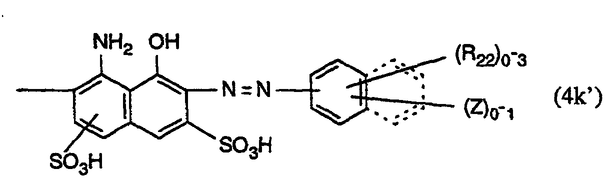 stehen, worin R₉ Acetyl, Benzoyl oder ein Rest der Formel 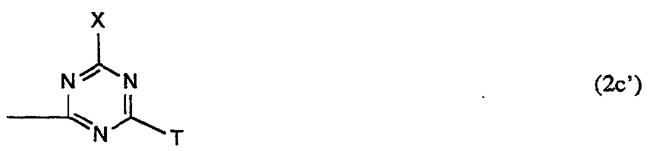 ist, worin X Halogen und T C₁-C₄-Alkoxy, C₁-C₄-Alkylthio, Hydroxy, Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Alkyl gegebenenfalls durch Hydroxy, Sulfo oder Sulfato und das Phenyl jeweils unsubstituiert oder durch Sulfo, Carboxy, Acetylamino, Methyl oder Methoxy substituiert ist, oder einen faserreaktiven Rest der Formel 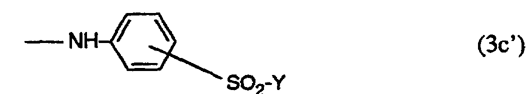 oder 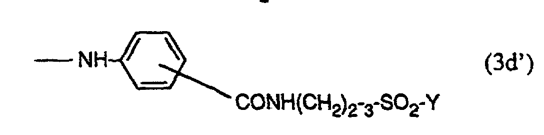 bedeuten, R₁₈ Wasserstoff, Hydroxy oder Sulfato ist, R₁₉ unabhängig die Bedeutung von R₁₈ hat oder für einen Rest der Formel 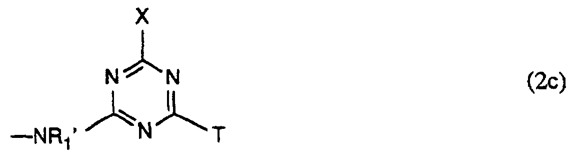 steht, worin R₁' Wasserstoff oder C₁-C₄-Alkyl ist, und X und T die oben angegebenen Bedeutungen haben, R₂₀ und R₂₁ unabhängig voneinander je für Wasserstoff, Methyl, Methoxy, 2-Hydroxyethoxy, 2-Sulfatoethoxy, Acetylamino, Propionylamino, Ureido oder Sulfo stehen, (R₂₂)₀₋₃ 0 bis 3 gleiche oder verschiedene Reste R₂₂ aus der Gruppe Sulfo, Chlor, C₁-C₄-Alkyl und C₁-C₄-Alkoxy bedeutet, Y Vinyl, β-Brom- oder β-Chlorethyl, β-Acetoxyethyl, β-Benzoyloxyethyl, β-Phosphatoethyl, β-Sulfatoethyl und β-Thiosulfatoethyl und insbesondere bevorzugt Vinyl oder β-Sulfatoethyl ist, und Z einen Rest der Formel
-SO₂-Y (2a)
oder
-CONR₂-(CH₂)ₙ-SO₂-Y (2b)
bedeutet, worin R₂ Wasserstoff oder C₁-C₄-Alkyl,
n eine ganze Zahl von 1 bis 6, und
Y die oben angegebene Bedeutung hat,
mit der Massgabe, dass mindestens einer der Reste K₁ und K₂ eine faserreaktive Gruppe trägt, und die Verbindungen der Formel (1') mindestens eine Sulfo- oder Sulfatogruppe aufweisen.

2. Verbindungen gemäss Anspruch 1 der Formel 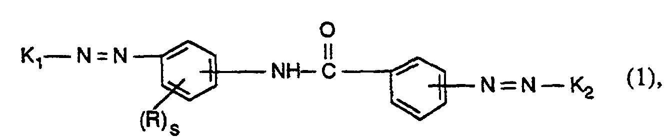 worin K₁, K₂ und (R)ₛ jeweils die im Anspruch 1 angegebene Bedeutung haben .

3. Verbindungen gemäss Anspruch 1 oder 2, dadurch gekennzeichnet, dass R Hydroxy, Methyl, Methoxy oder Sulfo und s die Zahl 1 oder 2 bedeuten.

4. Verbindungen gemäss einem der Ansprüche 1 bis 3, dadurch gekennzeichnet, dass K₁ und K₂ unabhängig voneinander je einen Rest der Formel (4j') oder (4k') bedeuten.

5. Verbindungen gemäss einem der Ansprüche 1 bis 4, dadurch gekennzeichnet, dass K₁ und K₂ identisch sind.

6. Verbindungen gemäss Anspruch 1 der Formel 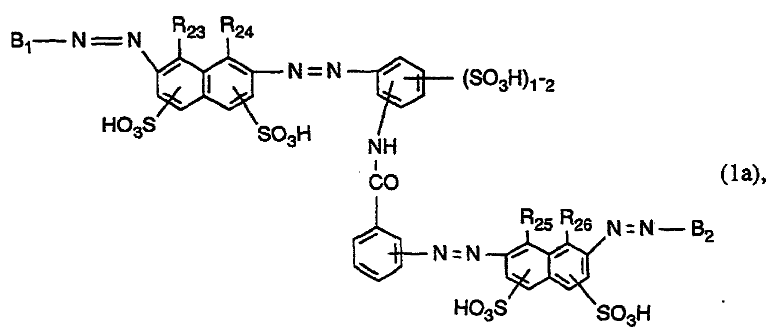 worin B₁ ein Rest der Formel 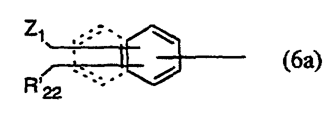 und B₂ ein Rest der Formel 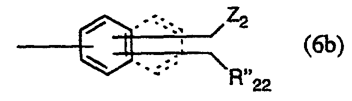 ist, R'₂₂ und R"₂₂ unabhängig voneinander je Wasserstoff, Sulfo, Chlor, C₁-C₄-Alkyl oder C₁-C₄-Alkoxy bedeutet, von den Resten R₂₃ und R₂₄ einer Hydroxy und der andere Amino bedeutet, von den Resten R₂₅ und R₂₆ einer Hydroxy und der andere Amino bedeutet und Z₁ und Z₂ unabhängig voneinander je für einen Rest der im Anspruch 1 angegebenen Formel (2a) oder (2b) stehen.

7. Verbindungen gemäss Anspruch 1 der Formel 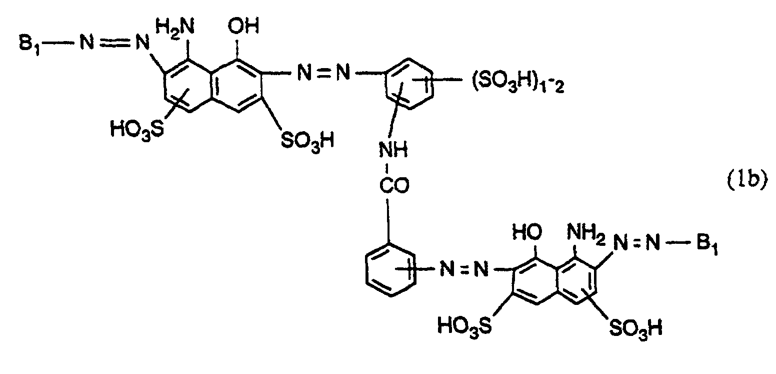 oder 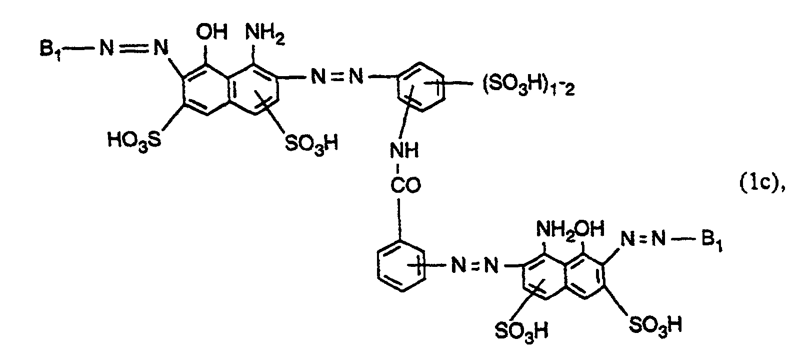 worin B₁ ein Rest der Formel 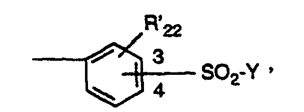 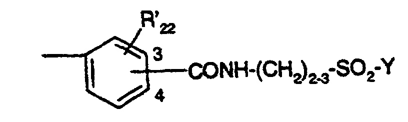 oder 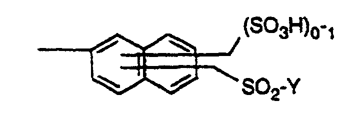 ist, R'₂₂ Wasserstoff, Sulfo, Methyl oder Methoxy ist und Y Vinyl oder β-Sulfatoethyl bedeutet.

8. Farbstoffmischung enthaltend zwei oder mehrere Verbindungen der Formel (1') gemäss Anspruch 1.

9. Farbstoffmischung gemäss Anspruch 8, dadurch gekennzeichnet , dass sie
(a) eine Verbindung der Formel 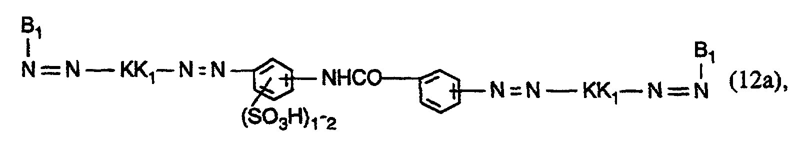
b) eine Verbindung der Formel 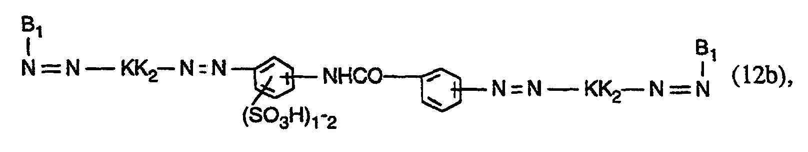
c) eine Verbindung der Formel 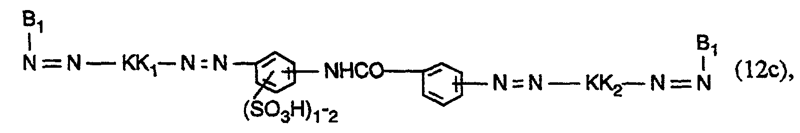 und
d) eine Verbindung der Formel 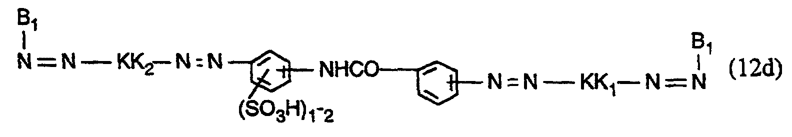 erhalten, worin B₁ jeweils die im Anspruch 6 angegebene Bedeutung hat, KK1 für den Rest von 1-Amino-8-hydroxynaphthalin-3,6-disulfonsäure (H-Säure) und KK2 für den Rest von 1-Amino-8-hydroxynaphthalin-4,6-disulfonsäure (K-Säure) steht.

10. Verfahren zur Herstellung von Verbindungen der Formel (1') gemäss Anspruch 1, dadurch gekennzeichnet, dass man in etwa 1 Moläquivalent der Verbindung der Formel 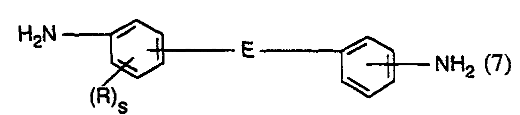 mit einem Nitrit in einem sauren Medium, tetrazotiert und die tetrazotierte Verbindung mit in etwa 1 Moläquivalent einer Kupplungskomponente der Formel
K₁ - H (8)
und in etwa 1 Moläquivalent einer Kupplungskomponente der Formel
K₂ - H (9)
kuppelt, worin für E, R, K₁, K₂ und s jeweils die im Anspruch 1 genannten Bedeutungen gelten.

11. Verwendung von Verbindungen der Formel (1') als faserreaktive Farbstoffe zum Färben oder Bedrucken von hydroxylgruppenhaltigen oder stickstoffhaltigen Fasermaterialien.

12. Verwendung gemäss Anspruch 11, dadurch gekennzeichnet, dass man cellulosehaltige Fasermaterialien, insbesondere baumwollhaltige Fasermaterialien, färbt oder bedruckt.

## Claims

1. A compound of formula 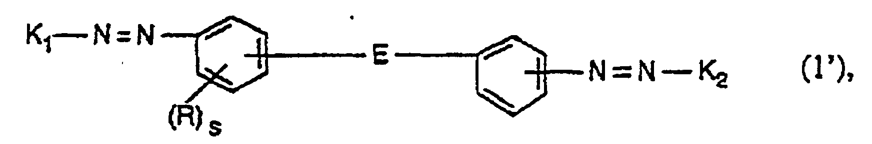 wherein E is the -NH-CO-, -NH-SO₂- or -SO₂-NH-SO₂- group, (R)ₛ denotes s identical or different substituents selected from the group consisting of sulfo, hydroxy, C₁-C₄alkyl, C₁-C₄alkoxy, halogen and cyano, s is O, 1 or 2, K₁ and K₂ are each independently of the other a radical of formula 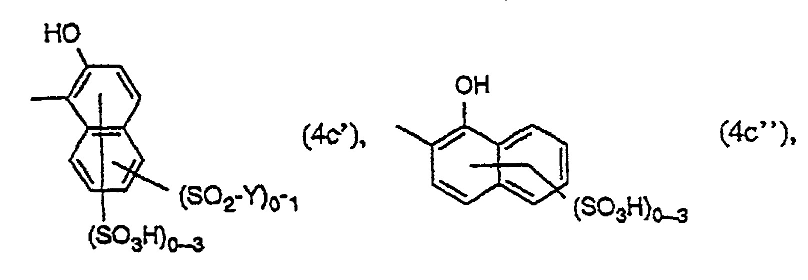 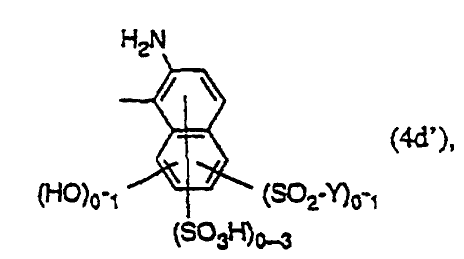 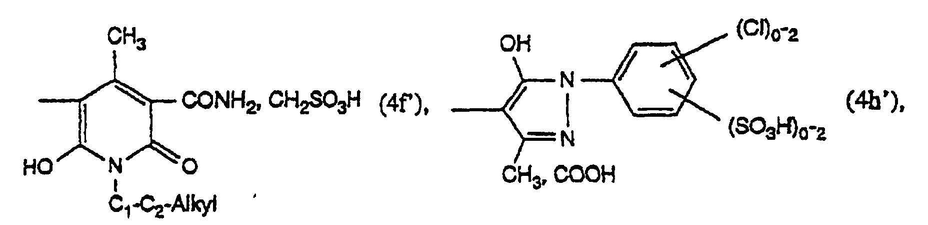 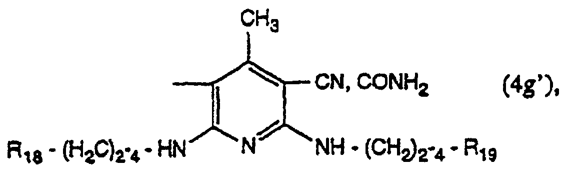 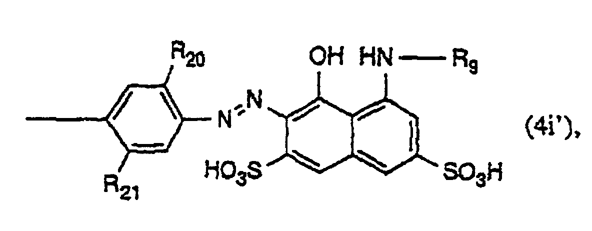 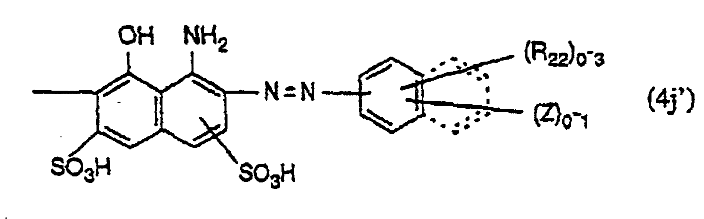 or 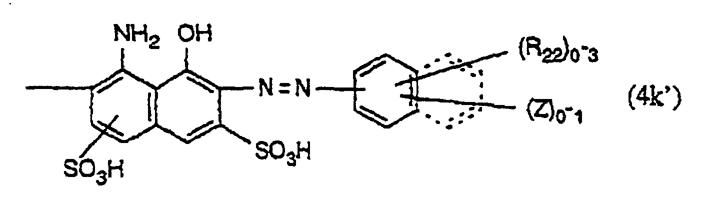 in which R₉ is acetyl, benzoyl or a radical of formula 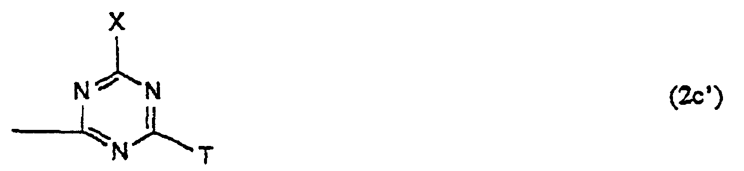 in which X is halogen and T is C₁-C₄alkoxy, C₁-C₄alkylthio, hydroxy, amino, N-C₁-C₄alkylamino which is unsubstituted or substituted in the alkyl moiety by hydroxy, sulfato or sulfo; morpholino, phenylamino or N-C₁-C₄alkyl-N-phenylamino, in which the alkyl is unsubstituted or substituted by hydroxy, sulfo or sulfato and the phenyl is unsubstituted or substituted by sulfo, carboxy, acetylamino, methyl or methoxy, or a fibre-reactive radical of formula 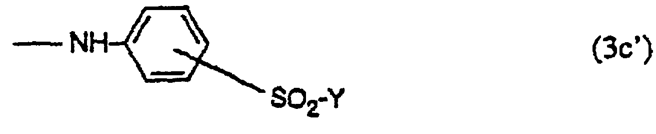 or 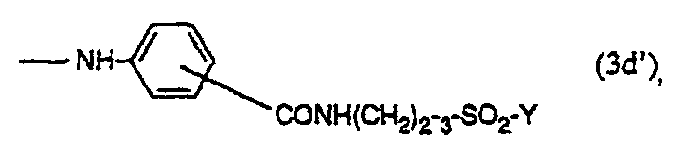 R₁₈ is hydrogen, hydroxy or sulfato, R₁₉ independently has the meaning of R₁₈ or is a radical of formula 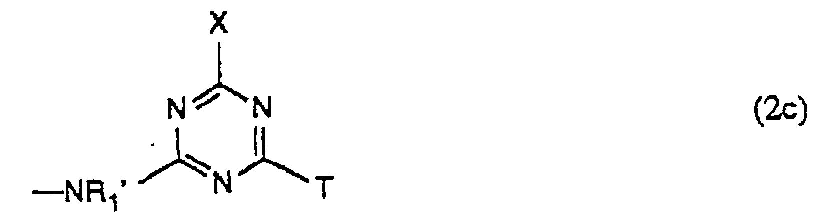 in which R₁' is hydrogen or C₁-C₄alkyl and X and T are as defined above, R₂₀ and R₂₁ are each independently of the other hydrogen, methyl, methoxy, 2-hydroxyethoxy, 2-sulfatoethoxy, acetylamino, propionylamino, ureido or sulfo, (R₂₂)₀₋₃ is 0 to 3 identical or different radicals R₂₂ selected from the group consisting of sulfo, chloro, C₁-C₄alkyl and C₁-C₄alkoxy, Y is vinyl, β-bromoethyl or β-chloroethyl, β-acetoxyethyl, β-benzoyloxyethyl, β-phosphatoethyl, β-sulfatoethyl and β-thiosulfatoethyl and, particularly preferably, vinyl or β-sulfatoethyl, and Z is a radical of formula
-SO₂-Y (2a)
or
-CONR₂-(CH₂)ₙ-SO₂-Y (2b)
in which R₂ is hydrogen or C₁-C₄alkyl, n is an integer from 1 to 6, and Y is as defined above, with the proviso that at least one of the radicals K₁ and K₂ carries a fibre-reactive group and the compound of formula (1) contains at least one sulfo or sulfato group.

2. A compound according to claim 1, of formula 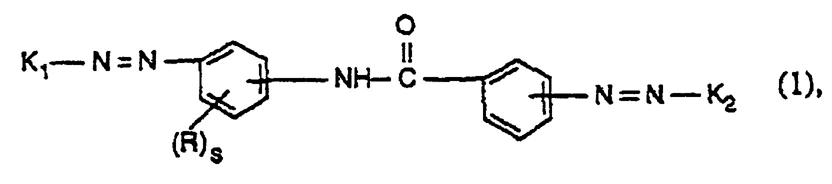 wherein K₁, K₂ and (R)ₛ are each as defined in claim 1.

3. A compound according to claim 1 or 2, wherein R is hydroxy, methyl, methoxy or sulfo and s is 1 or 2.

4. A compound according to any one of claims 1 to 3, wherein K₁ and K₂ are each independently of the other a radical of formula (4j') or (4k').

5. A compound according to any one of claims 1 to 4, wherein K₁ and K₂ are identical.

6. A compound according to claim 1, of formula 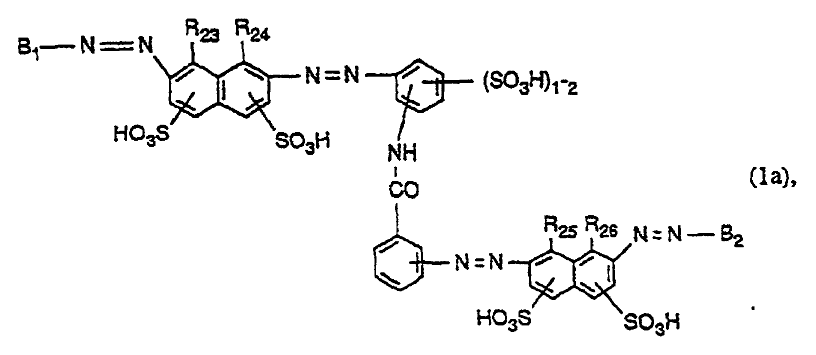 in which B₁ is a radical of formula 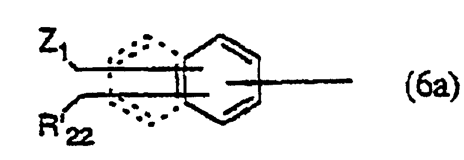 and B₂ is a radical of formula 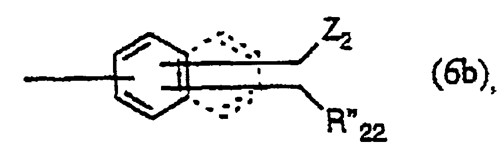 R'₂₂ and R' '₂₂ are each independently of the other hydrogen, sulfo, chloro, C₁-C₄alkyl or C₁-C₄alkoxy; one of R₂₃ and R₂₄ is hydroxy and the other is amino; one of R₂₅ and R₂₆ is hydroxy and the other is amino, and Z₁ and Z₂ are each independently of the other a radical of formula (2a) or (2b) as set forth in claim 1.

7. A compound according to claim 1, of formula 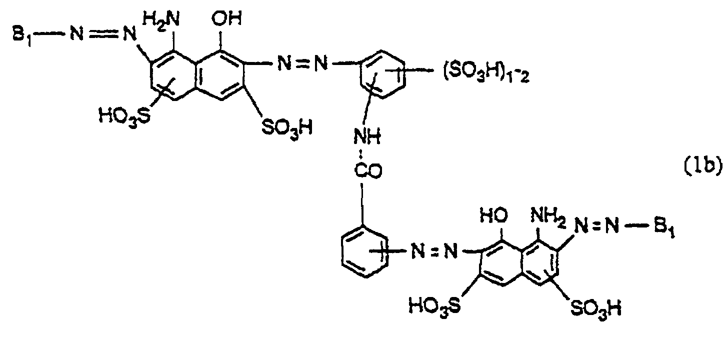 or 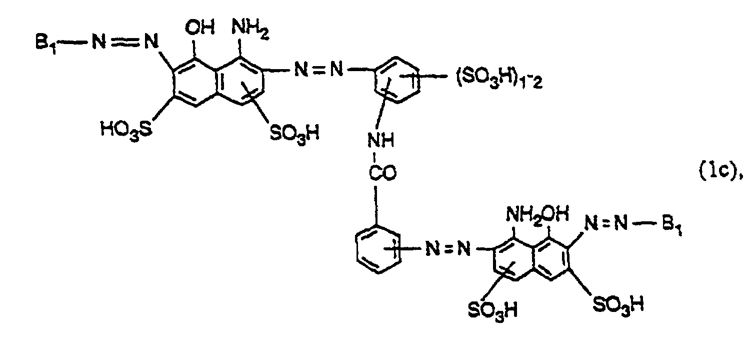 in which B₁ is a radical of formula 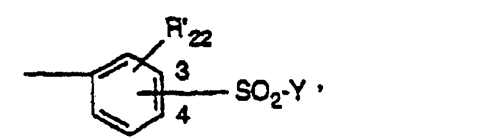 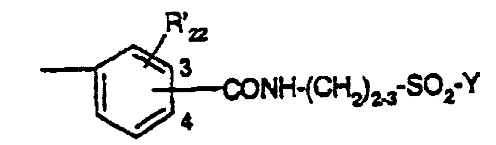 or 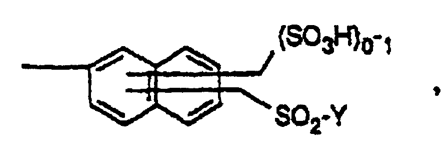 R'₂₂ is hydrogen, sulfo, methyl or methoxy, and Y is vinyl or β-sulfatoethyl.

8. A dye mixture comprising two or more than two compounds of formula (1') according to claim 1.

9. A dye mixture according to claim 8, comprising
(a) a compound of formula 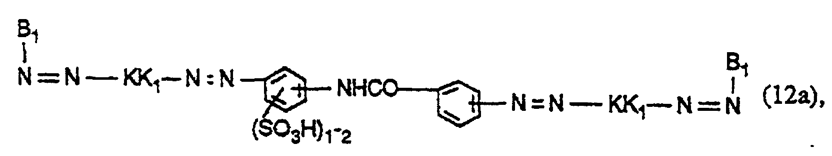
b) a compound of formula 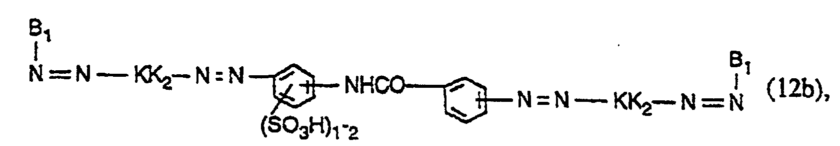
c) a compound of formula 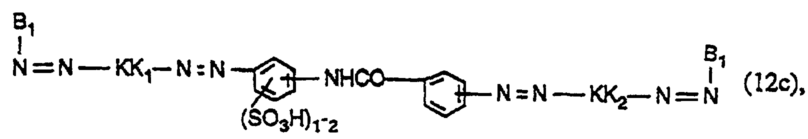 and
d) a compound of formula 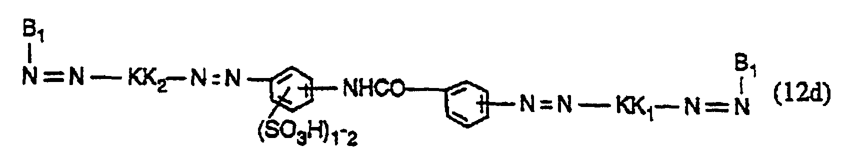 in which B₁ is in each case as defined in claim 6, KK1 is the radical of 1-amino-8-hydroxynaphthalene-3,6-disulfonic acid (H-acid), and KK2 is the radical of 1-amino-8-hydroxynaphthalene-4,6-disulfonic acid (K-acid).

10. A process for the preparation of a compound of formula (1') according to claim 1, which comprises tetrazotising about 1 molar equivalent of the compound of formula 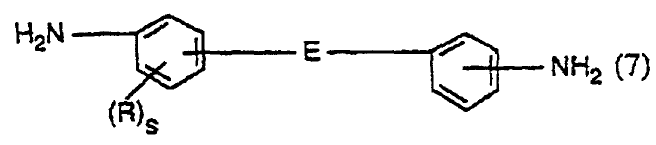 with a nitrite in acid medium and coupling the tetrazotised compound with about 1 molar equivalent of a coupling component of formula
K₁ - H (8)
and about 1 molar equivalent of a coupling component of formula
K₂ - H (9),
in which E, R, K₁, K₂ and s each have the meanings set forth in claim 1.

11. Use of a compound of formula (1') as a fibre-reactive dye for dyeing or printing hydroxyl group-containing or nitrogen-containing fibre materials.

12. Use according to claim 11, which comprises dyeing or printing cellulosic fibre materials, especially cotton-containing fibre materials.

## Revendications

1. Composés de formule 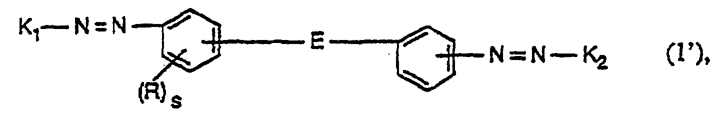 dans laquelle E représente le groupe -NH-CO-, -NH-SO₂- ou -SO₂-NH-SO₂-,
(R)ₛ représente s substituants identiques ou différents choisis parmi les groupes sulfo, hydroxy, alkyle en C₁ à C₄, alcoxy en C₁ à C₄, un atome d'halogène et un groupe cyano,
s représente le nombre 0, 1 ou 2,
K₁ et K₂ représentent indépendamment l'un de l'autre un résidu de formule 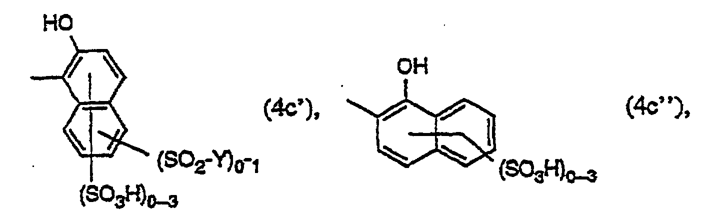 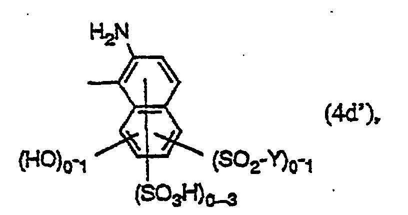 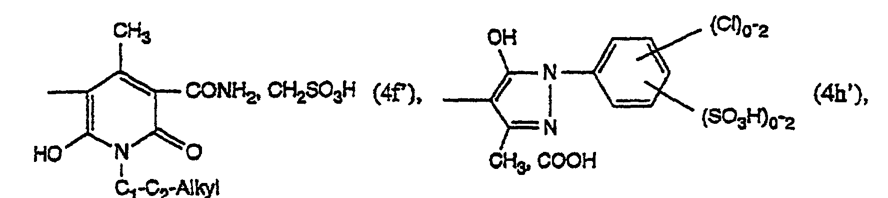 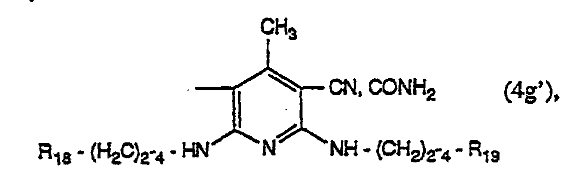 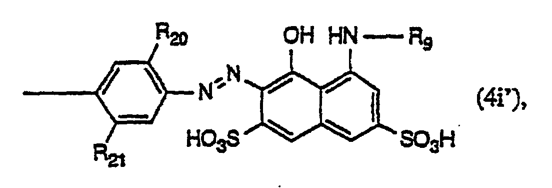 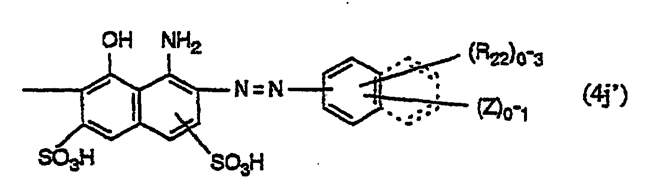 ou 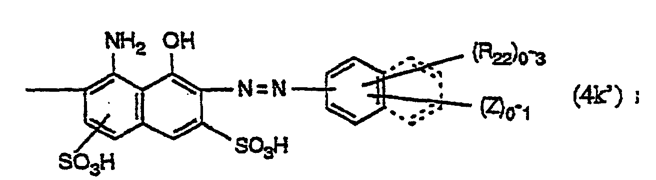 dans lesquelles R₉ est un groupe acétyle, benzoyle, ou un groupe de formule 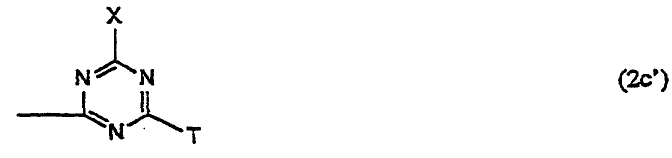 dans laquelle X est un atome d'halogène et T un groupe alcoxy en C₁ à C₄, alkylthio en C₁ à C₄, hydroxy, amino, N-alkyle en C₁ à C₄-amino, qui est non substitué dans la partie alkyle ou substitué par un groupe hydroxy, sulfato ou sulfo, morpholino, phénylamino ou N-alkyle en C₁ à C₄-N-phénylamino, dans laquelle le groupe alkyle est éventuellement substitué par un groupe hydroxy, sulfo ou sulfato, et le phényle est non substitué ou substitué par un groupe sulfo, carboxy, acétylamino, méthyle ou méthoxy, ou un résidu réactif avec les fibres de formule 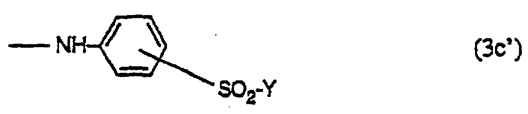 ou 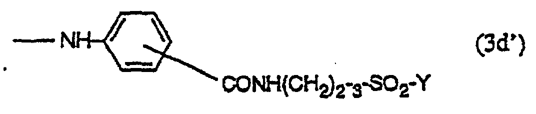 R₁₈ représente un atome d'hydrogène, un groupe hydroxy ou sulfato, R₁₉ a indépendamment la signification de R₁₈ ou représente un groupe de formule 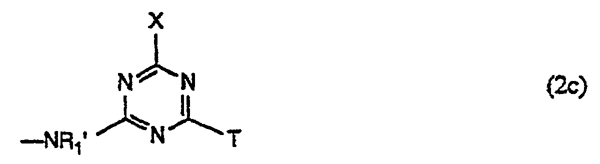 dans laquelle R₁' est un atome d'hydrogène ou un groupe alkyle en C₁ à C₄, et X et T ont les significations indiquées ci-dessus, R₂₀ et R₂₁ représentent indépendamment l'un de l'autre respectivement un atome d'hydrogène, un groupe méthyle, méthoxy, 2-hydroxyéthoxy, 2-sulfatoéthoxy, acétylamino, propionylamino, uréido ou sulfo, (R₂₂)₀₋₃ représente de 0 à 3 groupes R₂₂ identiques ou différents choisis parmi le groupe sulfo, un atome de chlore, un groupe alkyle en C₁ à C₄ et alcoxy en C₁ à C₄, Y représente le vinyle, le β-bromo- ou β-chloroéthyle, β-acétoxyéthyle, β-benzoyloxyéthyle, β-phosphatoéthyle, β-sulfatoéthyle et β-thiosulfatoéthyle et en particulier de préférence vinyle ou β-sulfatoéthyle, et Z représente un groupe de formule
-SO₂-Y (2a)
ou
-CONR₂-(CH₂)ₙ-SO₂-Y (2b)
dans lesquelles R₂ représente un atome d'hydrogène ou un groupe alkyle en C₁ à C₄,
n un nombre entier de 1 à 6, et
Y a la signification indiquée ci-dessus,
avec la condition qu'au moins l'un des groupes K₁ et K₂ porte un groupe réactif avec les fibres, et que les composés de formule (1') présentent au moins un groupe sulfo ou sulfato.

2. Composés selon la revendication 1 de formule 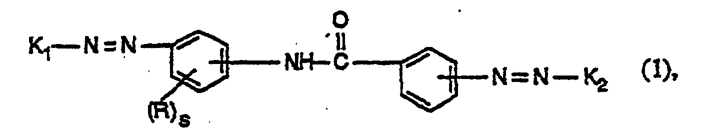 dans laquelle K₁, K₂ et (R)ₛ ont respectivement la signification indiquée à la revendication 1.

3. Composés selon la revendication 1 ou 2, caractérisés en ce que R représente un groupe hydroxy, méthyle, méthoxy ou sulfo et s le nombre 1 ou 2.

4. Composés selon l'une des revendications 1 à 3, caractérisés en ce que K₁ et K₂ représentent indépendamment l'un de l'autre respectivement un groupe de formule (4j') ou (4k').

5. Composés selon l'une des revendications 1 à 4, caractérisés en ce que K₁ et K₂ sont identiques.

6. Composés selon la revendication 1 de formule 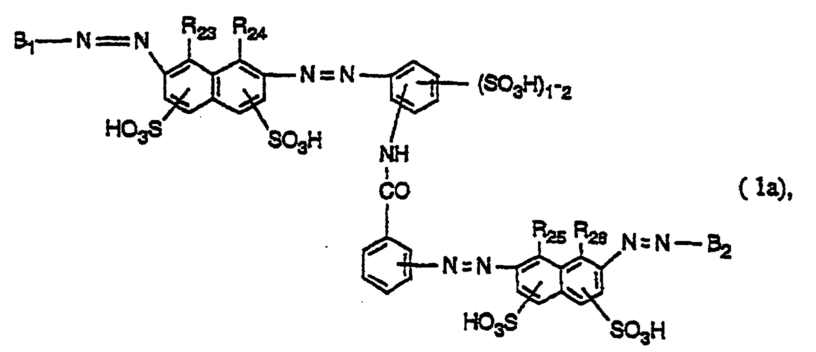 dans laquelle B₁ est un résidu de formule 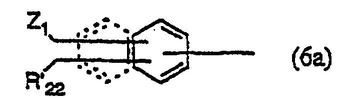 et B₂ est un résidu de formule 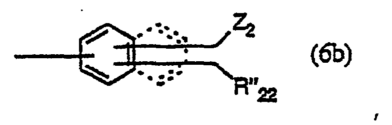 R'₂₂ et R"₂₂ représentent indépendamment l'un de l'autre respectivement un atome d'hydrogène, un groupe sulfo, un atome de chlore, un groupe alkyle en C₁ à C₄ ou alcoxy en C₁ à C₄, parmi les groupes R₂₃ et R₂₄ l'un représente un groupe hydroxy et l'autre amino, parmi les groupes R₂₅ et R₂₆ l'un représente un groupe hydroxy et l'autre amino et Z₁ et Z₂ représentent indépendamment l'un de l'autre un groupe de formule (2a) ou (2b) indiquée à la revendication 1.

7. Composés selon la revendication 1 de formule 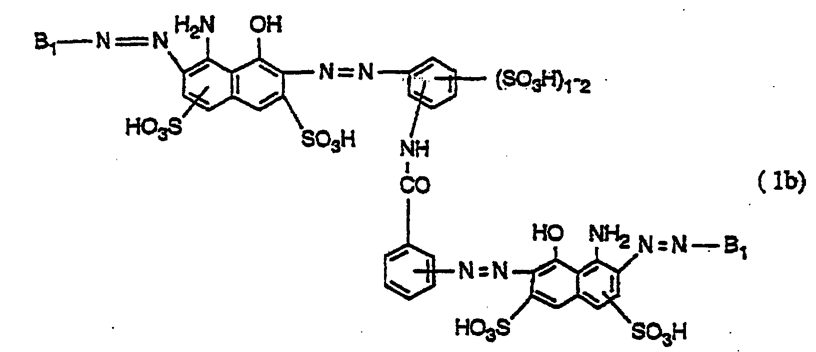 ou 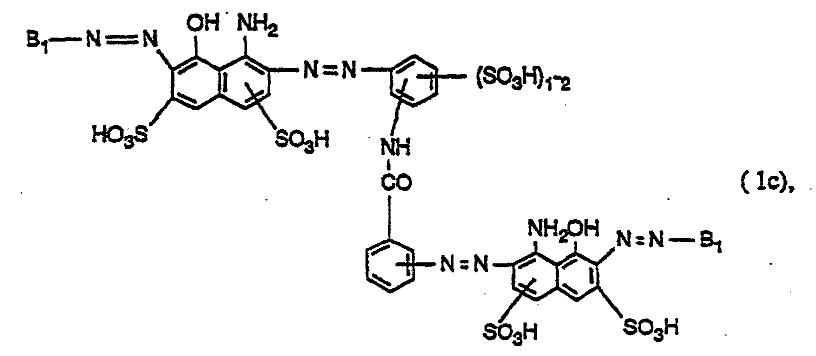 dans laquelle B₁ est un groupe de formule 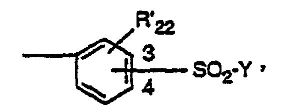 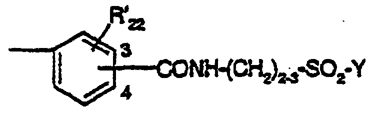 ou 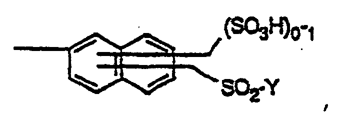 R'₂₃ représente un atome d'hydrogène, un groupe sulfo, méthyle ou méthoxy et Y représente un groupe vinyle ou β-sulfatoéthyle.

8. Mélange de colorants contenant deux composés de formule (1') selon la revendication 1 ou plus.

9. Mélange de colorants selon la revendication 8, caractérisé en ce qu'il contient
(a) un composé de formule 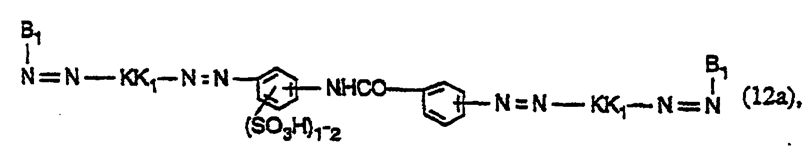
(b) un composé de formule 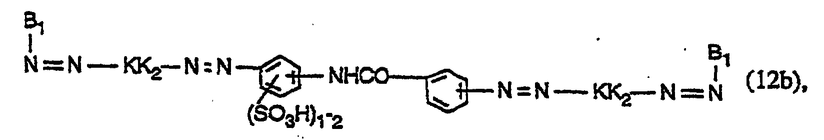
(c) un composé de formule 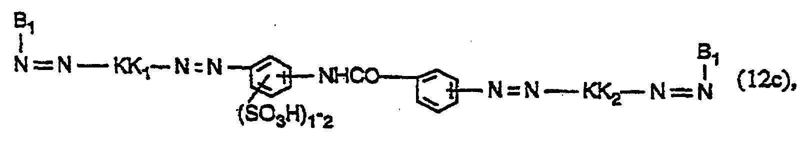 et
(d) un composé de formule 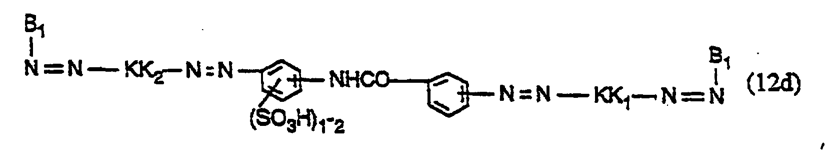 dans laquelle B₁ a respectivement la signification indiquée à la revendication 6, KK1 représente le résidu de l'acide 1-amino-8-hydroxynaphtalèn-3,6-disulfonique (acide H) et KK2 le résidu de l'acide 1-amino-8-hydroxynaphtalèn-4,6-disulfonique (acide K).

10. Procédé pour la préparation de composés de formule (1') selon la revendication 1, caractérisé en ce qu'on tétraazote environ 1 équivalent molaire du composé de formule 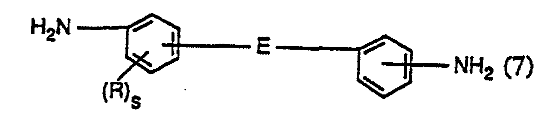 avec un nitrite en milieu acide, et en copulant le composé tétraazoté avec environ 1 équivalent molaire d'un composant de copulation de formule
K₁-H (8)
et dans environ 1 équivalent molaire d'un composant de copulation de formule
K₂-H (9),
formules dans lesquelles les significations indiquées respectivement à la revendication 1 pour E, R, K₁, K₂ et s sont respectivement valables.

11. Utilisation de composés de formule (1') comme colorants réactifs des fibres pour la teinture ou l'impression de matériaux fibreux contenant des groupes hydroxyle ou contenant de l'azote.

12. Utilisation selon la revendication 11, caractérisée en ce qu'on teinte ou on imprime sur des matériaux fibreux cellulosiques, en particulier des matériaux fibreux à base de coton.
